(19) Europäisches Patentamt
European Patent Office
Office européen des brevets

(11) **EP 1 592 253 B1**

(12) **EUROPEAN PATENT SPECIFICATION**

(45) Date of publication and mention
of the grant of the patent:
**27.06.2012 Bulletin 2012/26**

(51) Int Cl.:
*H04N 7/24* (2011.01)    *G06T 9/00* (2006.01)
*H04N 7/26* (2006.01)

(21) Application number: **05076128.7**

(22) Date of filing: **26.11.2002**

(54) **Generating differentially coded data of quantized coordinate data of vertices of moving objects**

Erzeugung differenziell-kodierter Koordinatendaten von Knotenpunkten bewegter Objekte

Génération de données différentielles de données coordonnées de vertices d'objets mobiles

(84) Designated Contracting States:
**BE DE ES FR GB NL**

(30) Priority: **27.11.2001 US 333130 P**
**03.12.2001 US 334541 P**
**26.12.2001 US 342101 P**
**04.04.2002 US 369597 P**
**18.10.2002 KR 2002063852**

(43) Date of publication of application:
**02.11.2005 Bulletin 2005/44**

(62) Document number(s) of the earlier application(s) in
accordance with Art. 76 EPC:
**02258133.4 / 1 331 824**

(73) Proprietor: **Samsung Electronics Co., Ltd.**
**Suwon-si,**
**Gyeonggi-do (KR)**

(72) Inventors:
• **Lee, Shin-jun**
**Seocho-gu**
**Seoul (KR)**
• **Jung, Seok-yoon**
**Seocho-gu**
**Seoul (KR)**
• **Jang, Euee-seon,**
**101-2301 Gangbyeon**
**Seongdong-gu**
**Seoul (KR)**
• **Woo, Sang-oak,**
**508-1303 Gongjak Maeul**
**Anyang City**
**Kyungki-do (KR)**
• **Han, Mahn-jin,**
**307-602 Satbyeol Maeul**
**Seongnam-City**
**Kyungki-do (KR)**
• **Kim, Do-kyoon**
**Seongnam-si**
**Kyeonggi-do (KR)**
• **Jang, Gyeong-ja**
**Deokyang-gu**
**Goyang-city**
**Kyungki-do (KR)**

(74) Representative: **Greene, Simon Kenneth**
**Elkington and Fife LLP**
**Prospect House**
**8 Pembroke Road**
**Sevenoaks**
**Kent TN13 1XR (GB)**

(56) References cited:
**WO-A-01/41156    US-A- 6 075 901**

• **YANG J-H ET AL: "COMPRESSION OF 3-D TRIANGLE MESH SEQUENCES BASED ON VERTEX-WISE MOTION VECTOR PREDICTION" IEEE TRANSACTIONS ON CIRCUITS AND SYSTEMS FOR VIDEO TECHNOLOGY, IEEE INC. NEW YORK, US, vol. 12, no. 12, December 2002 (2002-12), pages 1178-1184, XP001141949 ISSN: 1051-8215**
• **AHN JEONG-HWAN ET AL: "Motion-compensated compression of 3D animation models" ELECTRONICS LETTERS, IEE STEVENAGE, GB, vol. 37, no. 24, 22 November 2001 (2001-11-22), pages 1445-1446, XP006017574 ISSN: 0013-5194**

- ISO/IEC JTC1/SC29/WG11 N4364 / HAN, M., COTARMANAC'H, A.: "InterpolatorCompression Core Experiments Description N4364" ISO IEC JTC1 SC29 WG11, [Online] July 2001 (2001-07), XP001152020 SYDNEY Retrieved from the Internet: URL:http://www.chiariglione.org/mpeg/worki ng_documents/mpeg-04/systems/interpolator_ compression_ce.zip> [retrieved on 2005-05-15]
- MPEG: "Call for Proposals for Interpolator Compression N4098" ISO IEC JTC1 SC29 WG11, March 2001 (2001-03), XP001152019 SINGAPORE
- VARAKLIOTIS S ET AL: "Coding of animated 3-D wireframe models for internet streaming applications" MULTIMEDIA AND EXPO, 2001. ICME 2001. IEEE INTERNATIONAL CONFERENCE ON 22-25 AUG. 2001, PISCATAWAY, NJ, USA,IEEE, 22 August 2001 (2001-08-22), pages 237-240, XP010661818 ISBN: 0-7695-1198-8
- JANG E S: "3D animation coding: its history and framework" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, vol. 2, 30 July 2000 (2000-07-30), pages 1119-1122, XP010513206 ISBN: 0-7803-6536-4
- "INFORMATION TECHNOLOGY - CODING OF AUDIO-VISUAL OBJECTS - PART 1: SYSTEMS TECHNOLOGIES DE L'INFORMATION - CODAGE DES OBJETS AUDIOVISUELS - PARTIE 1: SYSTEMES" 1999, ISO/IEC 14496-1:1999, XX, XX, PAGE(S) I-XXIII,1 , XP002321342 * page 137 * * page 245 *
- SIGNES J: "BINARY FORMAT FOR SCENE (BIFS): COMBINING MPEG-4 MEDIA TO BUILD RICH MULTIMEDIA SERVICES" PROCEEDINGS OF THE SPIE, SPIE, BELLINGHAM, VA, US, vol. 3653, 25 January 1999 (1999-01-25), pages 1506-1517, XP000984179 ISSN: 0277-786X
- KIM J D K ET AL: "Animation data compression in MPEG-4: interpolators" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, vol. VOL. 2 OF 3, 22 September 2002 (2002-09-22), pages 33-36, XP010607503 ISBN: 0-7803-7622-6
- KIM D.-K. ET AL.: "Technical Description of Interpolator Compression Tools MPEG02/M7873" ISO/IEC JTC1/SC29/WG11 MPEG02/M7873, [Online] March 2002 (2002-03), XP001152010 JEJU Retrieved from the Internet: URL:http://www.epoline.org/dossier/EP02258 133> [retrieved on 2005-08-10]
- KIM D.-K. ET AL.: "Bitstream syntax and Decoding process of interpolator compression and it's apparatus (Interpolator Compression part of the AFX study document)"[Online] XP001152011 Retrieved from the Internet: URL: http://www.epoline.org/dossier/EP02258 133> [retrieved on 2005-08-10]
- KIM D.-K. ET AL.: "Result of Core Experiment on Interpolator Compression MPEG01/M7774 (Version 1)" ISO/IEC JTC1/SC29/WG11 MPEG01/M7774, [Online] December 2001 (2001-12), XP001152012 Pattaya Retrieved from the Internet: URL:http://www.epoline.org/dossier/EP02258 133> [retrieved on 2005-08-10]
- KIM D.-K. ET AL.: "Result of Core Experiment on Interpolator Compression MPEG01/M7774 (Version 2)" ISO/IEC JTC1/SC29/WG11 MPEG01/M7774, [Online] December 2001 (2001-12), XP001152013 Pattaya Retrieved from the Internet: URL:http://www.epoline.org/dossier/EP02258 133> [retrieved on 2005-08-10]

**Description**

The present invention relates to an apparatus and a method for encoding and decoding synthesized images, and more particularly, to an apparatus and a method for encoding and decoding key value data of a coordinate interpolator representing the location of an object using coordinates of a vertex consisting of x, y, and z components in a keyframe-based graphic animation.

Three-dimensional (3D) animation techniques have been widely adopted in 3D computer games or virtual reality computer applications. Virtual reality modeling language (VRML) is a representative example of such 3D animation techniques.

International multimedia standards, such as MPEG-4 binary format for scene (BIFS) and virtual reality modeling language (VRML), support a keyframe-based 3D animation using an interpolator node. In MPEG-4 BIFS and VRML, there are various kinds of interpolators including a scalar interpolator, a position interpolator, a coordinate interpolator, a orientation interpolator, a normal line interpolator, and a color interpolator, and these interpolators and their functions and characteristics are shown in Table 1.

Table 1

| Interpolator | Characteristics | Function |
|---|---|---|
| Scalar interpolator | Linear interpolation of scalar variations | Capable of representing area, diameter, and intensity |
| Position interpolator | Linear interpolation on 3D coordinates | Parallel movement in 3D space |
| Orientation interpolator | Linear interpolation of 3D coordinate axis and amount of rotation | Rotation in 3D space |
| Coordinate interpolator | Linear interpolation of variations in 3D coordinates | 3D morphing |
| Normal line interpolator | Linear interpolation of 3D coordinates of normal line | Capable of representing variations in 3D vector of normal line |
| Color interpolator | Linear interpolation of color information | Capable of representing variations in color |

Among the interpolators shown in Table 1, the coordinate interpolator is used to represent information on the location of each vertex constituting a 3D object in a keyframe-based animation and are comprised of keys and key value fields. Key fields represent the position of each keyframe on a temporal axis using discontinuous numbers in a range between - ∞ and ∞. Each of the Key value fields specifies information on the position of each of the vertices constituting a 3D object at a certain moment represented by each of the keys and consists of three components x, y, and z. Each of the key value fields includes as many key values as each of the key fields has. In such a keyframe-based animation, predetermined keyframes are located at arbitrary places on a temporal axis, and animation data between the keyframes are filled by linear interpolation.

Since linear interpolation is employed in MPEG-4 BIFS and VRML, a considerable amount of key data and key value data is required to represent an animation as naturally and smoothly as possible using linear interpolators. In addition, in order to store and transmit such a natural and smooth animation, a storage of a large capacity and a considerable amount of time are needed. Therefore, it is preferable to compress interpolators in order to make it easier to store and transmit the interpolators.

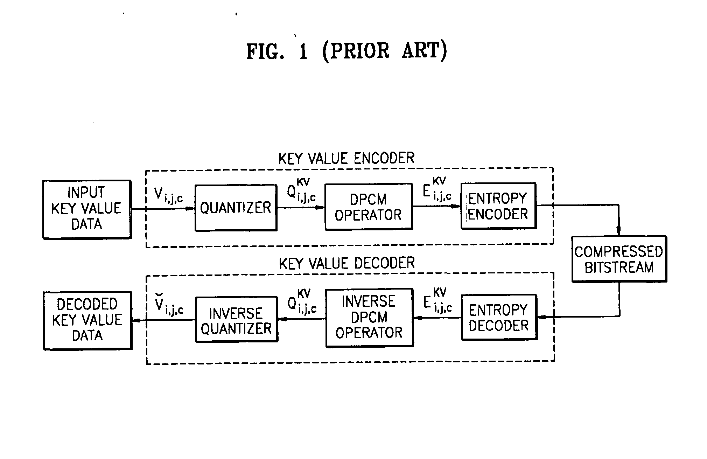

In predictive MF field coding (PMFC), which is one of the methods for encoding and decoding interpolator nodes that have been adopted in MPEG-4 BIFS, key value data of a coordinate interpolator are encoded using a quantizer, a differential pulse code modulation (DPCM) operator, and an entropy encoder, as shown in FIG. 1. Referring to FIG. 1, the quantizer and the DPCM operator removes redundancy of the key value data, and the DPCM operator outputs the results of its operation to the entropy encoder. However, PMFC is not sufficiently effective in encoding key value data because it entropy-encodes only differential data obtained from a general DPCM operation and considers only a spatial correlation between vertices constituting a 3D object in an animation without taking into consideration a temporal correlation between such vertices, which is very important in a keyframe-based animation.

Ahn, Jeong-Hwan et al, "Motion-Compesated compression of 3D animation models", Electronics Letters, IEE Stevenage UK" volume 37, number 24, 22 November 2001, pages 1445-1446, teaches coding intra frames and inter frames using DPCM coding, using correlations between points of an object for the intra frames.

A similar approach to compression of 3D triangle sequences is taught in Yang et al,"Compression of 3-D Triangle Mesh Sequences Based on Vertex-Wise Motion Vector Prediction", IEEE transactions on circuits and systems for video technology, volume 12, number 12, December 2002, pages 1178 to 1184.

ISO/IEC document ISO/IEC JTC 1/SC 29/WG 11 N 4364 "Interpolator Compression Core Experiments Design", Han and Cotarmanac'h, July 2001, proposes a key-frame based animation approach using both position and orientation interpolation.

ISO/IEC document ISO/IEC JTC 1/SC 29/WG 11 N 4098 "Call for proposals for Interpolator compression", Jang et al, March 2001, request proposals for such compression algorithms.

Such a compression algorithm in the context of MPEG 2 is described in more detail in ISO/IEC document ISO/IEC JTC 1/SC 29/WG 11 MPEG02/M7873 "Technical description of Interpolator Compression Tools2, Kim et al, March 2002.

Further details of 3D animation coding are taught in Jang, "3D Animation Coding: its History and Framework", International Conference on Multimedia and Expo 2000, published by the IEEE, volume 2, 30 July 2000, pages 1119 to 1122.

Varakliotis et al, "Coding of animated 3-D wireframe models for internet streaming applications , International Conference on Multimedia and Expo 2001, published by the IEEE, 22 August 2001, pages 237 to 240, teaches techniques for coding 3D wireframe models.

The present invention also seeks to provide a method and an apparatus for a DPCM operation which are used in the method and the apparatus for encoding key value data of a coordinate interpolator according to EP 1331824, the parent case to the present divisional patent application and perform a DPCM operation on coordinate data of a 3D object considering a temporal correlation between vertices of a 3D object in animation as well as a spatial correlation therebetween.

In an aspect, there is provided a method according to claim 9.

In another aspect, there is provided apparatus according to claim 1.

The present invention further seeks to provide a method and an apparatus for an inverse DPCM operation, which decode differential data generated by the method and the apparatus for a DPCM operation according to the present invention.

In an aspect, there is provided apparatus according to claim 6.

In another aspect, there is provided a method according to claim 14.

The above and other advantages of the present invention will become more apparent by describing in detail preferred embodiments thereof with reference to the attached drawings in which:

FIG. 1 is a block diagram of conventional apparatuses for encoding key value data of a coordinate interpolator;

FIG. 2A is a block diagram of an apparatus for encoding key value data of a coordinate interpolator according to a preferred embodiment of the preset invention, and FIG. 2B is a flowchart of a method for encoding key value data of a coordinate interpolator according to a preferred embodiment of the present invention;

FIG. 3A is a block diagram of a DPCM processor according to a preferred embodiment of the present invention, and FIG. 3B is a block diagram of a dictionary encoder;

FIG. 4A is a flowchart of a quantization operation according to a preferred embodiment of the present invention, FIG. 4B is a flowchart of a DPCM operation, FIG. 4C is a flowchart of dictionary encoding, and FIG. 4D is a flowchart of entropy-encoding according to a preferred embodiment of the present invention;

FIGS. 5A through 5C are diagrams illustrating quantized key value data, DPCMed key value data, and circular-quantized key value data according to the present invention, respectively;

FIG. 6A is a diagram illustrating DPCM mode encoding according to a preferred embodiment of the present invention, FIG. 6B is a diagram illustrating occurrence mode encoding, and FIG. 6C is a diagram illustrating incremental mode encoding;

FIG. 7A is a block diagram of an apparatus for decoding key value data of a coordinate interpolator according to a preferred embodiment of the present invention, and FIG. 7B is a flowchart of a method for decoding key value data of a coordinate interpolator according to a preferred embodiment of the present invention;

FIG. 8A is a block diagram of a dictionary decoder according to a preferred embodiment of the present invention, and FIG. 8B is a block diagram of an inverse DPCM processor;

FIG. 9A is a flowchart of dictionary decoding according to a preferred embodiment of the present invention, and FIG. 9B is a flowchart of an inverse DPCM operation;

FIG. 10 is a diagram illustrating vertices used in a coordinate interpolator and a bitstream of data of the components of each of the vertices;

FIG. 11A is a diagram illustrating DPCM mode decoding, FIG. 11B is a diagram illustrating occurrence mode decoding, and FIG. 11C is a diagram illustrating incremental mode decoding;

FIGS. 12 through 18 are diagrams illustrating examples of bitstream syntax, into which the order of reading bits from a bitstream during decoding according to a preferred embodiment of the present invention is realized;

FIG. 19 is a diagram illustrating an example of program codes by which operations for decoding key value data are realized;

FIGS. 20A and 20B are diagrams for comparing the performance of a method for encoding and decoding key value data of a coordinate interpolator according to the present invention with the performance of a conventional method for encoding and decoding key value data of a coordinate interpolator; and

FIG. 21A is a block diagram of a DPCM operator according to a preferred embodiment of the present invention, and FIG. 21 B is a block diagram of an inverse DPCM operator according to a preferred embodiment of the present invention.

Hereinafter, an apparatus for encoding key value data of a coordinate interpolator according to a preferred embodiment of the present invention will be described more fully with reference to the accompanying drawings.

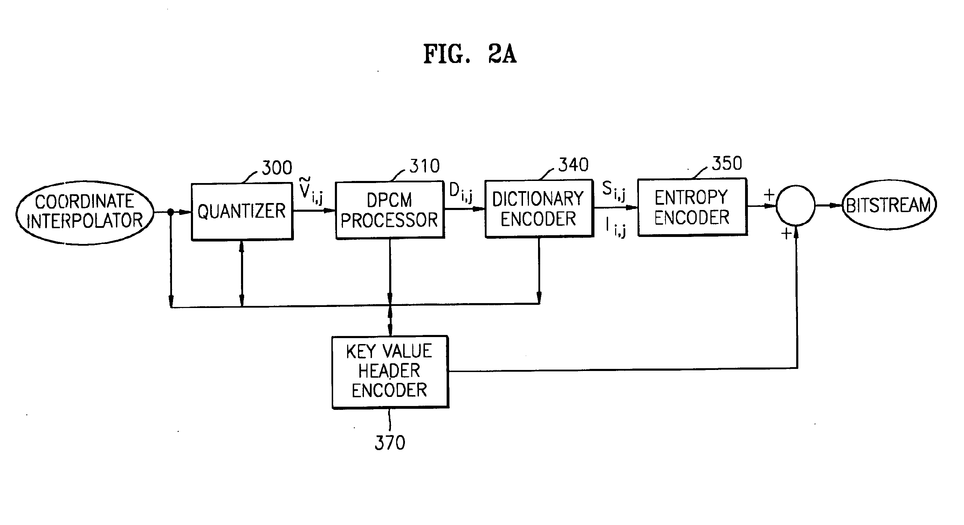

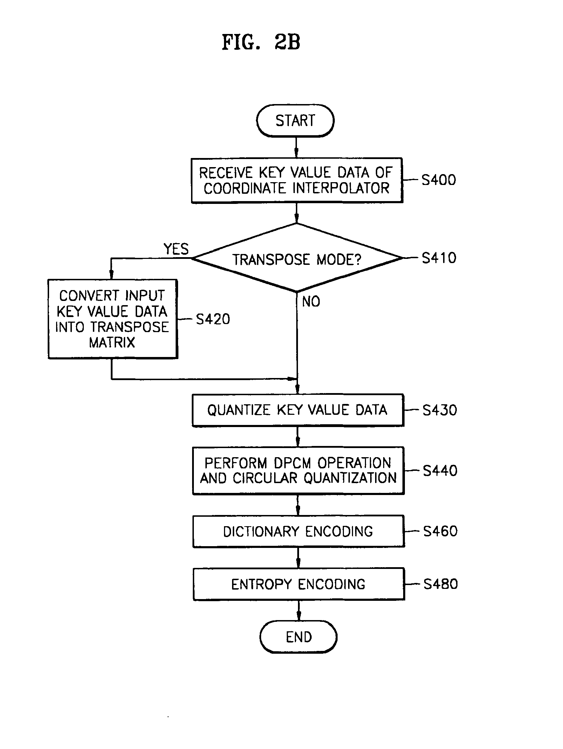

FIG. 2A is a block diagram of an apparatus for encoding key value data of a coordinate interpolator according to a preferred embodiment of the present invention, and FIG. 2B is a flowchart of a method for encoding key value data of a coordinate interpolator according to a preferred embodiment of the present invention.

Referring to FIG. 2A, the apparatus for encoding key value data of a coordinate interpolator includes a quantizer 300, which quantizes data of each of the components of each vertex representing key value data of a coordinate interpolator with predetermined quantization bits, a DPCM processor 310, which performs a predetermined DPCM operation on the quantized data of each of the components of each of the vertices, a dictionary encoder 340, which converts differential data into symbols and position indexes, and an entropy encoder 350, which entropy-encodes the symbols and position indexes of the differential data input thereinto.

A method for encoding key value data of a coordinate interpolator will be described in the following with reference to FIG. 2B.

Referring to FIG. 2B, key value data of a coordinate interpolator are input into the quantizer 300 in the form of an N × M matrix in step S400. An example of the input key value data of a coordinate interpolator is shown in the following table.

Table 2

|  | 1 | 2 | ... j | M |
|---|---|---|---|---|
| 1 | x(1,1), y(1,1), z(1,1) | x(1,2), y(1,2), z(1,2) |  | x(1,M), y(1,M), z(1,M) |
| 2 | x(2,1), y(2,1), z(2,1) | x(2,2), y(2,2), z(2,2) |  | x(2,M), y(2,M), z(2,M) |
| ... i |  |  | x(i,j), y(i,j), z(i,j) |  |
| N | x(N,1), y(N,1), z(N,1) | x(N,2), y(N,2), z(N,2) |  | x(N,M), y(N,M), z(N,M) |

In Table 2, N represents the number of key data (keyframes), and M represents the number of vertices in each keyframe.

The apparatus for encoding key value data of a coordinate interpolator according to the present invention operates in two different modes for encoding the key value data of a coordinate interpolator. One of the modes is a vertex mode, and the other is a transpose mode. In Table 2, the structure of key value data to be quantized in the quantizer 300 in a vertex mode is shown. Before quantizing the input key value data shown in Table 2, the apparatus for encoding key value data of a coordinate interpolator according to the present invention transposes the input key value data into an M × N matrix. The transposed matrix is inverse-quantized during decoding key value data, and the decoded key value data are converted into N × M matrix so that the same key value data as the input key value data can be retrieved.

Referring to FIG. 2B, the quantizer 300 checks whether the encoding mode of the key value data input from the outside is a transpose mode in step S410. If the encoding mode of the input key value data is a transpose mode, the N × M matrix of the input key value data is transposed into an M × N matrix in step S420.

Thereafter, the quantizer 300 quantizes the data of each of the components in the matrix of the key value data input thereinto with the predetermined quantization bits and outputs the quantized key value data of each of the components to the DPCM processor 310 in step S430. In the same step, the quantizer 300 converts minimum values among the input key value data of each of the components and a maximum range among the data ranges of the components into decimal numbers and outputs the decimal numbers to a key value header encoder 370.

The DPCM processor 310 performs a temporal DPCM operation, a spatial DPCM operation, and a spatio-temporal DPCM operation on the quantized key value data input thereinto, performs a circular quantization operation on the results of the three different DPCM operations, i.e., differential data each obtained from the three DPCM operations, and outputs the differential data having the lowest entropy among them to the dictionary encoder 340 in step S440.

The dictionary encoder 340 generates and outputs dictionary symbols $S_{i,j}$ and position indexes $I_{i,j}$, which correspond to the differential data input from the DPCM processor 310. In particular, the dictionary encoder 340 generates the dictionary symbols and the position indexes, which indicate the mode of the DPCM operation which has been performed on the input differential data, converts the input differential data into symbols or a symbol flag, corresponding to values of the input differential data, and position indexes, representing the positions of the symbols, and outputs the symbols and position indexes to the entropy encoder 350.

The entropy encoder 350 generates a bitstream by entropy-encoding the symbols and position indexes input from the dictionary encoder 340 in step S480.

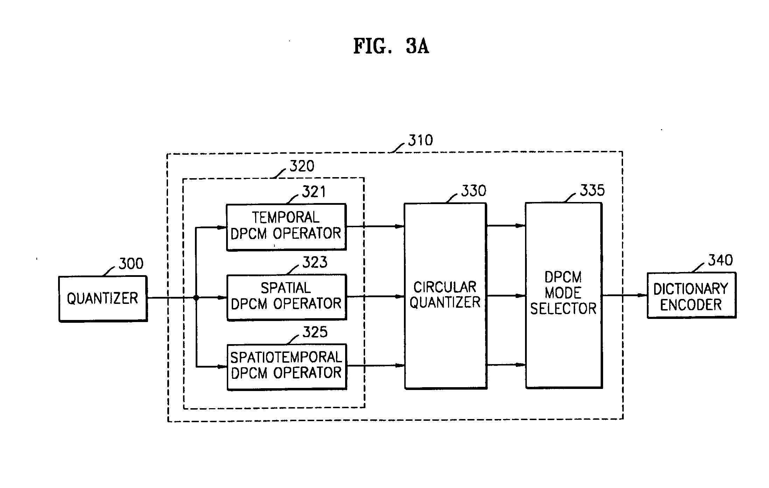

Hereinafter, steps S400 through S480 will be described more fully with reference to FIGS. 3A through 6C.

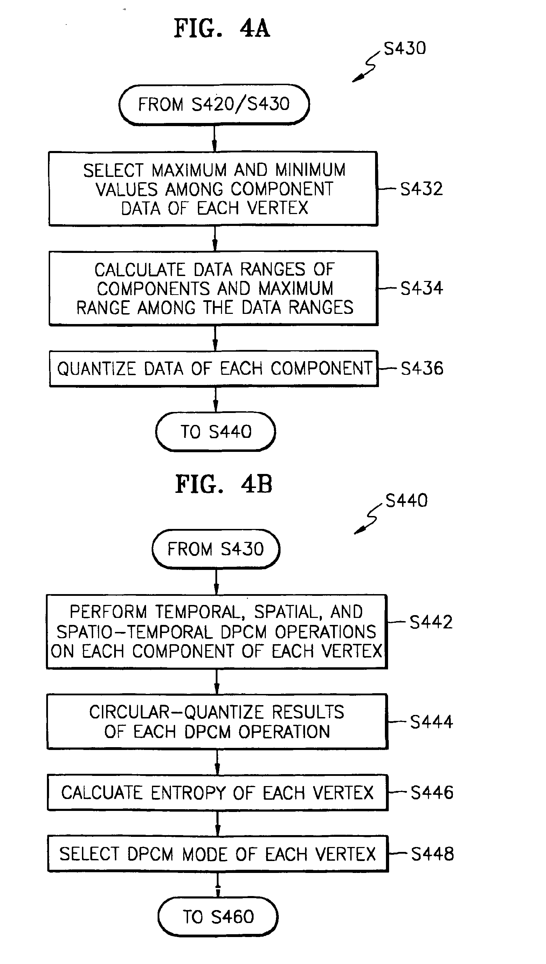

Referring to FIG. 4A, the quantizer 300 selects maximum values and minimum values among the data of each of the components in step S432.

The quantizer 300 calculates the data ranges of the components using the maximum and minimum values selected in step S432 and determines a maximum range among the data ranges of the components in step S434.

The quantizer 300 quantizes the key value data of each of the components using the minimum values among the data of each of the components and the maximum range among all the data ranges of the components, which is shown in the following equations.

$$\widetilde{V}_{i,j,x} = floor(\frac{V_{i,j,x} - fMin\_X}{fMax}(2^{nKVQBit} - 1) + 0.5) \quad \cdots (1)$$

$$\widetilde{V}_{i,j,y} = floor(\frac{V_{i,j,y} - fMin\_Y}{fMax}(2^{nKVQBit} - 1) + 0.5)$$

$$\widetilde{V}_{i,j,z} = floor(\frac{V_{i,j,z} - fMin\_Z}{fMax}(2^{nKVQBit} - 1) + 0.5)$$

In Equation (1), i represents key data, j represents a vertex, and nKVQBit represents a quantization bit size. In addition, fMin_X, fMin_Y, and fMin_Z represent the minimum values among the data of each of the components, and fMax represents the maximum range among the data ranges of the components.

The quantizer 300 outputs the quantized key value data of each of the components to the DPCM processor 310, converts fMin_X, fMin_Y, fMin_Z, and fMax into decimal numbers, and outputs the decimal numbers to the key value header encoder 370.

A computer stores floating-point numbers as 32-bit binary numbers. In order to reduce the number of bits required for encoding, the quantizer 300 converts fMin_X, fMin_Y, fMin_Z, and fMax into their respective mantissas and exponents in the decimal system, and this process is expressed by the following equation.

$$\underbrace{mantissa\_binary * 2^{exponent\_binary}}_{the\ floating-point\ number\ in\ binary\ system} = \underbrace{mantissa * 10^{exponent}}_{the\ floating-point\ number\ in\ decimal\ system} \quad \cdots (2)$$

For example, a floating-point number 12.34 can be converted into a binary number by a computer, which is shown in the following.

$$\underline{0}\ \underline{10001010111000010100011}\ \underline{10000010}$$
$$1 \qquad\qquad 2 \qquad\qquad\qquad 3$$

1: the sign
2: the mantissa in the binary system
3: the exponent in the binary system

The binary number can be converted into a decimal number following Equation (2), which is shown in the following.

$$\frac{0}{1} \; \frac{1234}{2} \; \frac{2}{3}$$

1: the sign
2: the mantissa in the decimal system
3: the exponent in the decimal system

In order to include a mantissa and an exponent in the decimal system in a bitstream, the quantizer 300 must calculate the numbers of bits required to represent the mantissa and the exponent. The exponent has a value between -38 and 38 and thus can be expressed together with its sign using 7 bits. The number of bits required to represent the mantissa is dependent on the number of digits. The values of the mantissa and the number of bits required to represent the mantissa are shown in the following table.

Table 3

| Values of mantissa | Digits of mantissa | Number of bits required |
|---|---|---|
| 0 | 0 | 0 |
| 1-9 | 1 | 4 |
| 10-99 | 2 | 7 |
| 100 - 999 | 3 | 10 |
| 1000 - 9999 | 4 | 14 |
| 10000 - 99999 | 5 | 17 |
| 100000 - 999999 | 6 | 20 |
| 1000000 - 9999999 | 7 | 24 |

The quantizer 300 outputs the minimum values fMin_X, fMin_Y, and fMin_Z among the data of each of the components and fMax the maximum range among the data ranges of the components, which have been converted following Equation (2) and Table 3, to the key value header encoder 370.

A DPCM processor and a DPCM operation according to the present invention will be described in the following with reference to FIGS. 3A and 4B.

FIG. 3A is a block diagram of the DPCM processor 310 according to the present invention. Referring to FIG. 3A, the DPCM processor 310 includes a DPCM operator 320, which performs a temporal DPCM operation, a spatial DPCM operation, and a spatio-temporal DPCM operation on the data of each of the components input from the quantizer 300, a circular quantizer 330, which reduces the range of the differential data input from the DPCM operator 320, and a DPCM mode selector 335, which selects one of the differential data input from the circular quantizer 330. The DPCM operator 320 includes a temporal DPCM operator 321, which performs a temporal DPCM operation on the quantized data of each of the components, a spatial DPCM operator 323, which performs a spatial DPCM operation on the quantized data of each of the components, and a spatio-temporal DPCM operator 325, which performs a spatio-temporal operation on the quantized data of each of the components.

FIG. 4B is a flowchart of a DPCM operation according to a preferred embodiment of the present invention. Referring to FIG. 4B, the quantized data of each of the components are input from the quantizer 300 to the temporal DPCM operator 321, the spatial DPCM operator 323, and the spatio-temporal DPCM operator 325, and then a temporal DPCM operation, a spatial DPCM operation, and a spatio-temporal DPCM operation are performed on the quantized data of each of the components input into their respective operators 321, 323, and 325, in step S442.

The temporal DPCM operator 321 calculates the differences between the component data of vertices in a current keyframe and the component data of vertices in a previous keyframe. A temporal DPCM operation is expressed by the following equation.

$$D_{i,j} = \tilde{V}_{i,j} - \tilde{V}_{i-1,j} \quad \cdots (3)$$

In Equation (3), i represents key data, and j represents the position index of a vertex.

The Spatial DPCM operator 323 calculates the differences between vertices in the same keyframe. In particular, the spatial DPCM operator 323 calculates the entropy of the previous vertices, on which a spatial DPCM operation has been performed prior to the current vertices currently being subjected to a spatial DPCM operation, using the following equation.

$$Entropy(P) = -\sum_{i=0}^{N-1} P_i \log_2 P_i \quad \cdots (4)$$

In Equation (4), $P_i$ represents the probability that a certain symbol is generated in a vertex and is equal to $\dfrac{F_i}{N}$ where $F_i$ represents how many times the symbol is generated and N represents the number of key data.

The spatial DPCM operator 323 determines a vertex having the lowest entropy among the vertices as a reference vertex and calculates differential data between the data of a vertex currently being subjected to a spatial DPCM operation and the data of the reference vertex. A spatial operation is expressed by the following equation.

$$D_{i,j} = \tilde{V}_{i,j} - \tilde{V}_{i,\mathrm{Re}f} \quad \cdots (5)$$

The spatio-temporal DPCM operator 325 performs a spatial DPCM operation on the vertices of the current keyframe, performs a spatial DPCM operation on the vertices of the previous keyframe using a vertex among the vertices of the previous keyframe, which corresponds to the reference vertex of the current keyframe, as a reference vertex, and calculates differential data between differential data corresponding to the vertices of the current keyframe and differential data corresponding to the vertices of the previous keyframe. In other words, the spatio-temporal DPCM operator 325 performs a temporal DPCM operation on the results of the spatial DPCM operation. The spatio-temporal DPCM operation is expressed by the following equation.

$$D_{i,j} = \tilde{V}_{i,j} - \{\tilde{V}_{i-1,j} + (\tilde{V}_{i,\mathrm{Re}f} - \tilde{V}_{i-1,\mathrm{Re}f})\} \quad \cdots (6)$$

During the spatial DPCM operation and the spatio-temporal DPCM operation, if $\tilde{V}_{i,\mathrm{Re}f}$ or $\{\tilde{V}_{i-1,j} + (\tilde{V}_{i,\mathrm{Re}f} - \tilde{V}_{i-1,\mathrm{Re}f})\}$ is smaller than a minimum value among the quantized data of each of the components, the minimum value is used for the spatial DPCM operation and the spatio-temporal DPCM operation. On the other hand, if $\tilde{V}_{i,\mathrm{Re}f}$ or $\{\tilde{V}_{i-1,j} + (\tilde{V}_{i,\mathrm{Re}f} - \tilde{V}_{i-1,\mathrm{Re}f})\}$ is greater than a maximum value among the quantized data of each of the components, the maximum value is used for the spatial DPCM operation and the spatio-temporal DPCM operation.

The DPCM operator 320 outputs the calculated differential data to the circular quantizer 330, and the circular quantizer 330 performs a circular quantization operation on the temporal-DPCMed differential data, the spatial-DPCMed differential data, and the spatio-temporal-DPCMed differential data and outputs the results of the circular quantization to the DPCM mode selector 335 in step S444.

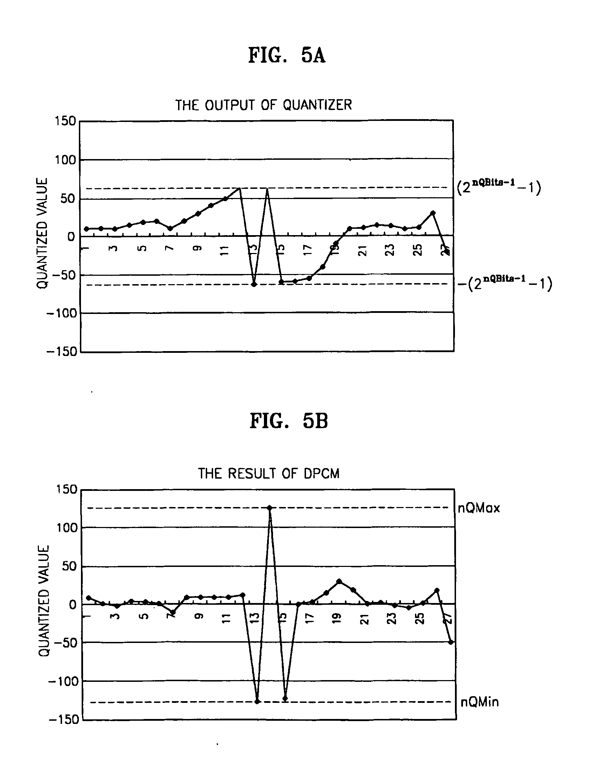

FIG. 5A is a graph showing an example of the output of the quantizer 300, and FIG. 5B is a graph showing the results of performing a DPCM operation on the quantized data shown in FIG. 5A. As shown in FIG. 5B, the range of data to be encoded can be increased as twice as it used be by performing a DPCM operation on quantized data. The purpose of a circular quantization is to perform a DPCM operation while maintaining the data range of quantized values.

In the present invention, the circular quantization is performed on the assumption that a maximum value among DPCMed differential data is circularly connected to a minimum value among the DPCMed differential data. If the result of performing a linear DPCM operation on two consecutive quantized data is greater than half of the maximum value among the DPCMed differential data output from the DPCM operator 320, a maximum range value of the DPCMed differential data output from the DPCM operator 320 is subtracted from the result of the linear DPCM so as to generate a value having a smaller absolute value. On the other hand, if the result of the linear DPCM is smaller than half of a minimum value in the maximum range, the maximum range value is added to the result of the linear DPCM so as to generate a value having a smaller absolute value.

The operation of the circular quantizer 330 is expressed by the following equation.

$$CircularQuanti\,zation(X_i): \qquad \cdots(7)$$

$X'_i = X_i - (nQMax - nQMin + 1) \qquad (if\ X_i \geq 0)$
$X'_i = X_i + (nQMax - nQMin + 1) \qquad (otherwise)$
$\tilde{X}_i = \min(|X_i|, |X'_i|)$

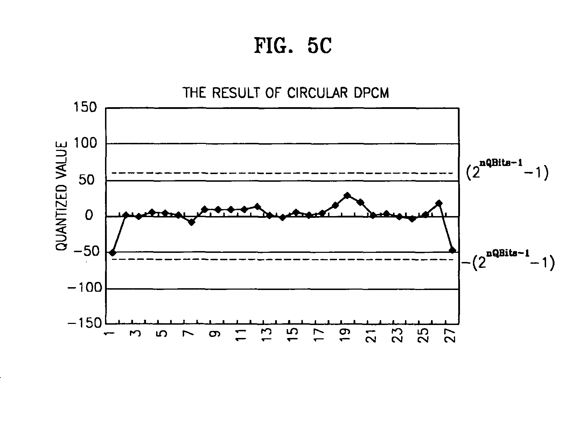

In Equation (7), nQMax represents a maximum value among DPCMed differential data, and nQMin represents a minimum value among the DPCMed differential data. FIG. 5C shows the results of performing circular quantization on the DPCMed differential data shown in FIG. 5B.

The circular quantizer 330 outputs the circular-quantized differential data to the DPCM mode selector 335.

The DPCM mode selector 335 calculates the entropy of the DPCMed differential data each obtained from the temporal DPCM operation, the spatial DPCM operation, and the spatio-temporal DPCM operation, following Equation (4) in step S446.

Thereafter, the DPCM mode selector 335 selects the DPCMed differential data having the lowest entropy among the results of the temporal DPCM operation, the spatial DPCM operation, and the spatio-temporal DPCM operation as a DPCM operation mode of each of the vertices and outputs the DPCMed differential data corresponding to the selected DPCM mode and information on the DPCM mode to the dictionary encoder 340 in step S448.

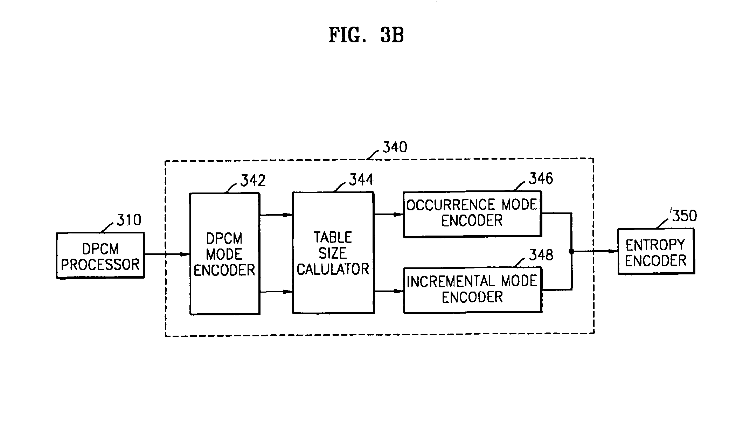

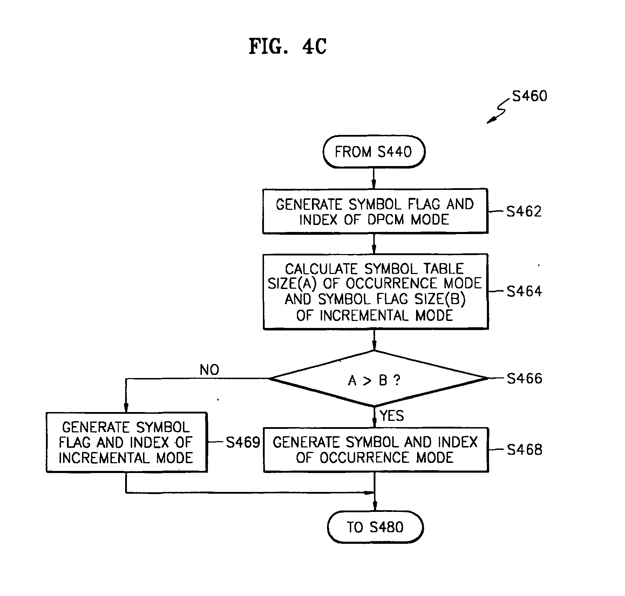

Hereinafter, the dictionary encoder 340 and its operation will be described with reference to FIGS. 3B and 4C.

FIG. 3B is a block diagram of the dictionary encoder 340 according to the present invention. Referring to FIG. 3B, the dictionary encoder 340 includes a DPCM mode encoder 342, which encodes the mode of DPCM, which has been performed on the data of each of the components of each of the vertices input thereinto, an occurrence mode encoder 346, which generates symbols, representing values of the differential data of each of the components of each of the vertices, and position indexes representing the positions of the symbols, an incremental mode encoder 348, which generates a symbol flag corresponding to the symbols and the position indexes representing the positions of the symbols, and a table size calculator 344, which calculates the sizes of a symbol table and a symbol flag table for representing the differential data of each of the components of each of the vertices and outputs the differential data input from the DPCM mode encoder 342 to either the occurrence mode encoder 346 or the incremental mode encoder 348.

The dictionary encoder 340 checks if a quantization selection flag of the differential data of each of the components of each of the vertices is 1 and, if it is, performs subsequent processes, which will be described in the following. On the other hand, if the quantization selection flag of the differential data of a certain vertex is 0, which means the vertex has the same quantized value in all the keyframes, the dictionary encoder 340 omits a dictionary encoding process and encodes the quantized value Qmin into a key value header.

FIG. 4C is a flowchart of a dictionary encoding process according to the present invention. Referring to FIG. 4C, the differential data of each of the components of each of the vertices, which have been generated in the DPCM processor 310, are input into the DPCM mode encoder 342, and then the DPCM mode encoder 342 generates the symbols representing the mode of the DPCM operation, which has been performed on the data of each of the components of each of the vertices, and the position indexes indicating the positions of the symbols in step S462.

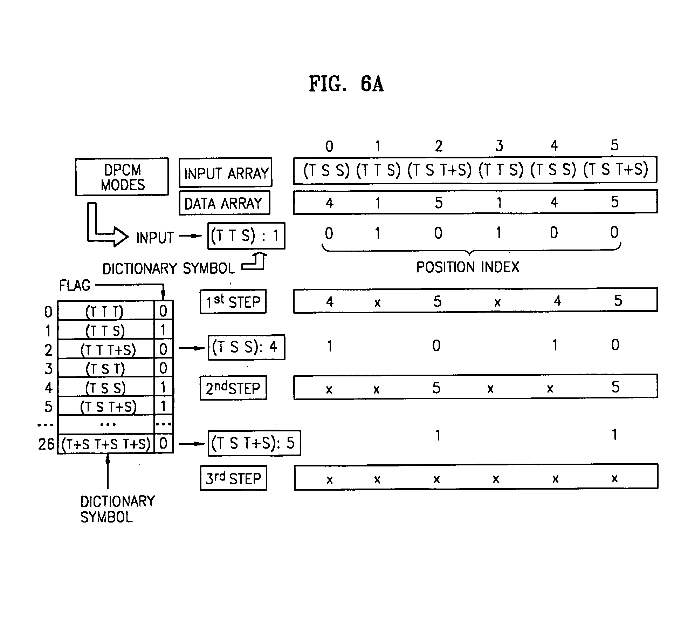

FIG. 6A is a diagram illustrating a method of encoding DPCM modes performed in the DPCM mode encoder 342 according to the present invention. Referring to FIG. 6A, the DPCM mode encoder 342 prepares a table, in which the DPCM modes of each of the components of each of the vertices and their respective symbols are shown, in advance, as shown in Table 4. Table 4 shows combinations of DPCM operations and their corresponding symbols. In Table 4, a temporal DPCM operation, a spatial DPCM operation, and a spatio-temporal DPCM operation are referred to as T, S, and T+S, respectively.

Table 4

| Symbols | DPCM Modes | Symbols | DPCM Modes | Symbols | DPCM Modes |
|---|---|---|---|---|---|
| 0 | (T, T, T) | 9 | (S, T, T) | 18 | (T+S, T, T) |
| 1 | (T, T, S) | 10 | (S, T, S) | 19 | (T+S, T, S) |
| 2 | (T, T, T+S) | 11 | (S, T, T+S) | 20 | (T+S, T, T+S) |
| 3 | (T, S, T) | 12 | (S, S, T) | 21 | (T+S, S, T) |
| 4 | (T, S, S) | 13 | (S, S, S) | 22 | (T+S, S, S) |
| 5 | (T, S, T+S) | 14 | (S, S, T+S) | 23 | (T+S, S, T+S) |
| 6 | (T, T+S, T) | 15 | (S, T+S, T) | 24 | (T+S, T+S, T) |
| 7 | (T, T+S, S) | 16 | (S, T+S, S) | 25 | (T+S, T+S, S) |
| 8 | (T, T+S, T+S) | 17 | (S, T+S, T+S) | 26 | (T+S, T+S, T+S) |

Each of the vertices includes three components x, y, and z, and accordingly, the number of combinations of DPCM operations is 27.

As shown in FIG. 6A, the differential data of each of the vertices corresponds to one of the symbols shown in Table 4 depending on what DPCM operations the differential data have been through. The DPCM mode encoder 342 makes the DPCM modes of the vertices correspond to their respective symbols shown in Table 4 and sets up flags indicating that the symbols exist in the differential data of their respective vertices.

The DPCM mode encoder 342 arranges symbols corresponding to the DPCM modes of the vertices in a column and generates position indexes for the symbols in the order of from a position index for a symbol having the smallest magnitude to a position index for a symbol having the greatest magnitude.

As shown in FIG. 6A, an array of symbols corresponding to the DPCM modes of the differential data of the vertices is (4, 1, 5, 1, 4, 5). Among the symbols, 1 is the smallest symbol and corresponds to (T, T, S). The DPCM mode encoder 342 generates a position index for the symbol 1 so that the places where 1 appears in the array of symbols are represented by 1. Accordingly, the position index is (0, 1, 0, 1, 0, 0).

Thereafter, the DPCM mode encoder 342 generates a position index for the second smallest symbol 4, which corresponds to a DPCM mode (T, S, S), so that the places where 4 is located are represented by 1. In the generation of the position index for the symbol 4, the locations of the symbol 1 are not counted. Accordingly, the position index for the symbol 4 is (1, 0, 1, 0). In the same manner, the DPCM mode encoder 342 generates a position index for a symbol 5, which corresponds to (T, S, T+S). The position index for the symbol 5 is (1, 1).

Thereafter, the DPCM mode encoder 342 outputs the flags and the position indexes to the table size calculator 344.

Referring to FIGS. 3B and 4C again, the table size calculator 344 calculates the size (A) of a symbol table used for encoding the input differential data in an occurrence mode, and the size (B) of a symbol flag used for encoding the input differential data in an incremental mode, which correspond to the symbols in the previously set symbol table in step S464.

The table size calculator 344 compares the size ($A = S*(AQP+1)$ where S represents the number of symbols included in differential data and AQP represents the size of bits used to represent a symbol) of the symbol table used in the occurrence mode encoder 346 with the size ($B = 2^{AQP+1} - 1$ where AQP represents the size of bits used to represent a symbol) of the symbol flag corresponding the respective symbols in step S446.

The table size calculator 344 outputs the differential data of each of the vertices to the occurrence mode encoder 346, if A is smaller than B, and outputs them to the incremental mode encoder 348, if B is smaller than A.

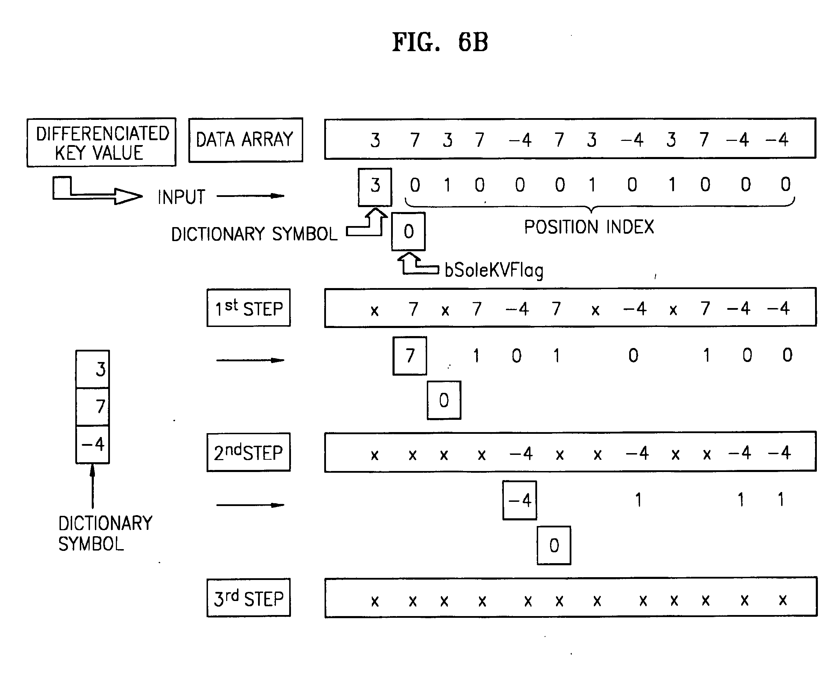

The operation of the occurrence mode encoder 346 will be described in the following with reference to FIG. 6B.

The occurrence mode encoder 346 generates symbols corresponding to the values of input differential data of each vertex and position indexes indicating the locations of their respective symbols in step S468.

Referring to FIG. 6B, when input differential data of a vertex is (3, 7, 3, 7, -4, 7, 3, -4, 3, 7, -4, -4), the occurrence mode encoder 346 prepares a table, in which the symbols 3, 7, and -4 corresponding to differential values of differential data of each vertex are sequentially written in a row, in step S468.

The occurrence mode encoder 346 encodes the first symbol 3 in the array of the symbols and generates a position index for the symbol 3 so that the places where 3 is located are represented by 1 and the other places are represented by 0. The position index for the symbol 3 is (0 1 0 0 0 1 0 1 0 0 0).

Next, the occurrence mode encoder 346 generates a position index for the next symbol 7. As shown in FIG. 6B, the locations of the previous symbol are not counted again in the generation of the position index for the next symbol.

Accordingly, the position index for the symbol 7 is (1 0 1 0 1 0 0).

In the occurrence mode encoder 346, all position indexes for symbols are generated considering only the locations of symbols which have not been encoded yet, and thus a position index for a symbol -4 is (1 1 1).

In FIG. 6B, a flag bSoleKV is set to 0. The flag bSoleKV indicates whether or not a symbol appears only one time in an array of symbols of differential data. If a symbol appears only one time and thus its position index consists of only 0s, bSoleBK is set to 1 for the corresponding symbol, and the position index of the corresponding symbol is not encoded. The occurrence mode encoder 346 outputs the symbols of the input differential data, the position indexes of the symbols, and bSoleKV to the entropy encoder 350 for entropy-encoding differential data.

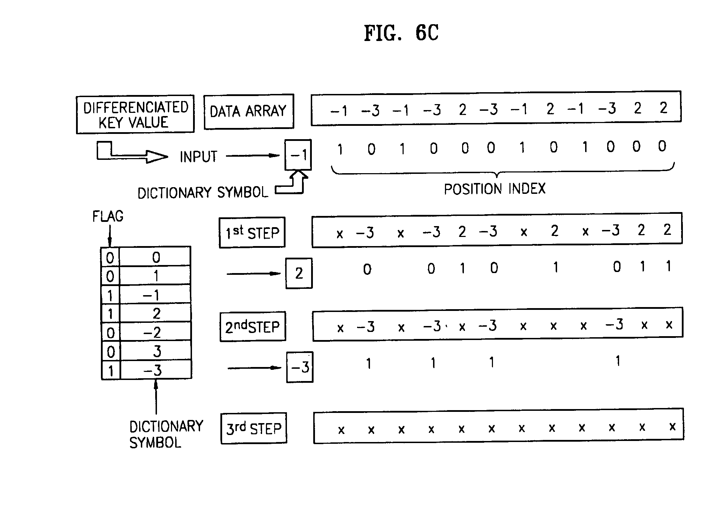

Hereinafter, the operation of the incremental mode encoder 348 according to the present invention will be described with reference to FIG. 6C.

The incremental mode encoder 348 generates a symbol flag indicating whether or not symbols included in a predetermined symbol table exist in input differential data and position indexes for the symbols in step S469.

The incremental mode encoder 348 generates in advance a table for symbols which are expected to exist in input differential data. In the table, symbols are arranged in column in the order from a symbol having the lowest absolute value to a symbol having the greatest absolute value, and between two symbols having the same absolute value, the one having a positive value is arranged in a higher row than the other. Accordingly, symbols are written in the table in the order of 0, 1, -1, 2, -2, 3, -3, .... The size of a symbol flag corresponding to symbols in a symbol table is $2^{AQP+1}-1$. For example, if AQP is 2, the number of symbols which can be represented by a symbol flag is 7. The symbol flag is set to 1 if a value corresponding to a symbol exists in differential data. Position indexes are generated for only symbols, for which the symbol flag is set to 1.

Referring to FIG. 6C, if differential data input into the incremental mode encoder 348 are (-1, -3, -1, -3, 2, -3, -1, 2, -1, -3, 2, 2), symbols existing in the differential data are (-1, 2, -3), and thus the symbol flag (0, 0, 1, 1, 0, 0, 1) is determined.

The incremental mode encoder 348 generates a position index for a symbol which is located in a higher row in the symbol table than other symbols first. As shown in FIG. 6C, the incremental mode encoder 348 sets up the places where a symbol -1, which ranks first in the symbol table among the symbols existing in the differential data, appears at 1 and sets up other places at 0 so that a position index for the symbol -1 is (1 0 1 0 0 0 1 0 1 0 0 0).

Next, the incremental mode encoder 348 generates a position index (0 0 1 0 1 0 1 1) for a symbol 2 without considering the positions of the symbol -1, which has already been encoded. Finally, the incremental mode encoder 348 generates a position index (1 1 1 1) for a symbol 3 without considering the positions of the symbols -1 and 2, which have already been encoded. The incremental mode encoder 348 outputs the symbol flag and the position indexes for their respective symbols to the entropy encoder 350.

All position indexes generated by the occurrence mode encoder 346 and the incremental mode encoder 348 have a flag called nTrueOne which indicates whether or not original position indexes have been inversed. Specifically, if nTrueOne is set to 0, position indexes are considered obtained by inversing their original position indexes. In a case where position indexes include a lot of 1 s, it is possible to enhance the arithmetic encoding efficiency by inversing the position indexes so as to increase the number of 0s.

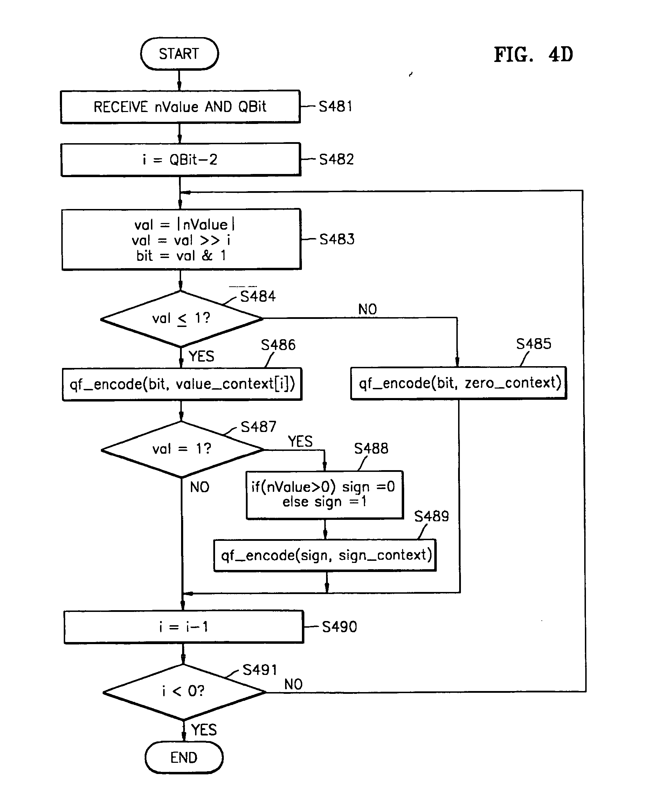

Hereinafter, the operation of the entropy encoder 350 will be described with reference to FIG. 4.

The entropy encoder 350 according to the present invention entropy-encodes the symbol flag representing the symbols of the differential data and the position indexes for the symbols, which are input from the incremental mode encoder 348, and entropy-encodes the symbols of the differential data and their respective position indexes, which are input from the occurrence mode encoder 346, using a function enodeSignedQuasiAAC( ).

In encodeSignedQuasiAAC( ), an adaptive-arithmetic-encoded bitstream is generated using a context regarding input values and their signs. In particular, in encodeSignedQuasiAAC( ), a first bit which is not 0 is encoded, then its sign is encoded, and other bits are encoded using a zero context.

FIG. 4D is a flowchart of a process of encoding a symbol using encodeSignedQuasiAAC( ).

The entropy encoder 350 receives a symbol nValue of differential data to be encoded and its bit size QBit in step S481.

The entropy encoder 350 subtracts 2 from nQBit and stores the result of the subtraction as a variable i in step S482.

In step S483, the entropy encoder 350 stores the absolute value of the symbol nValue as a variable val and performs a shift-right (SR) operation on val as many times as i. The entropy encoder 350 performs an logic AND operation on 1 and the result of the SR operation and stores the result of the logic AND operation as a variable bit.

In the first cycle of the process of encoding a symbol using encodeSignedQuasiAAC( ), a first bit among input values to be entropy-encoded except for sign bits is detected, and in subsequent cycles, other bits are read one by one.

The entropy encoder 350 checks if val is not greater than 1 in step S484. If val is greater than 1, the value of 'bit' is encoded using a function qf_encode() under a zero context in step S485. On the other hand, if val is not greater than 1, the value of 'bit' is encoded using the function qf_encode() under an i-th context in step S486.

When val is not greater than 1, the entropy encoder 350 checks again if val is 1 in step S487. If val is 1, the sign of nValue is set up in step S488 and nValue is encoded based on its sign and a sign context in step S489.

When the encoding process for one bit is completed, the entropy encoder 350 decrease i by 1 in step S490 and then checks if the current value of i is smaller than 0 in step S491. The entropy encoder 350 entropy-encodes the input values by repeatedly performing S483 through S490 until i is smaller than 0.

Accordingly, the entropy encoder 350 encodes a first bit of an input value, which is not 0, following a context allotted to the first bit and encodes other bits following the zero context.

Hereinafter, information to be encoded into a key value header in the key value header encoder 370 will be described with reference to FIG. 2A.

The key value header encoder 370 receives an input coordinate coordinator and encodes a data mode, the number of vertices in each keyframe, the number of bits required for the number of vertices, and the maximum number of effective digits of each floating-point number.

The key value header encoder 370 encodes a quantization bit number, minimum values among key value data of each component of each of the vertices and a maximum data range among the data ranges of each of the components of each of the vertices, and maximum and minimum values among quantized data of each of the components of each of the vertices.

The key value header encoder 370 receives the mode of a DPCM operation, which has been performed on the data of each of the components of each of the vertices, from the DPCM processor 310, receives a dictionary encoding mode from the dictionary encoder 340, and encodes the DPCM operation mode and the dictionary encoding mode.

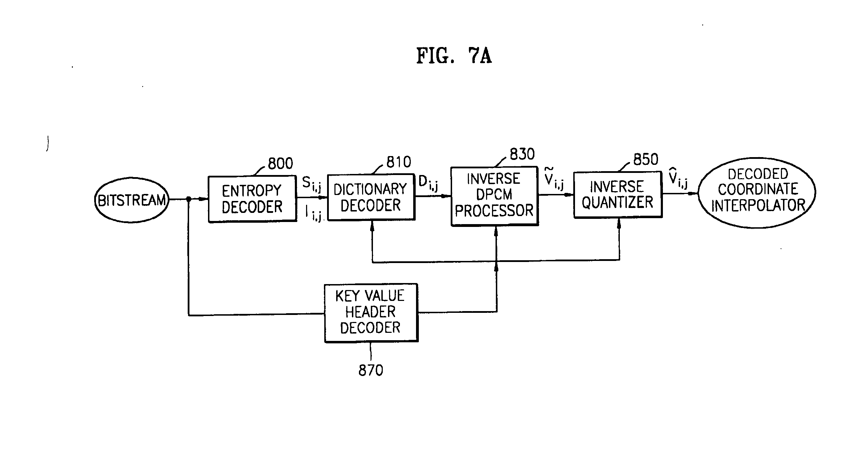

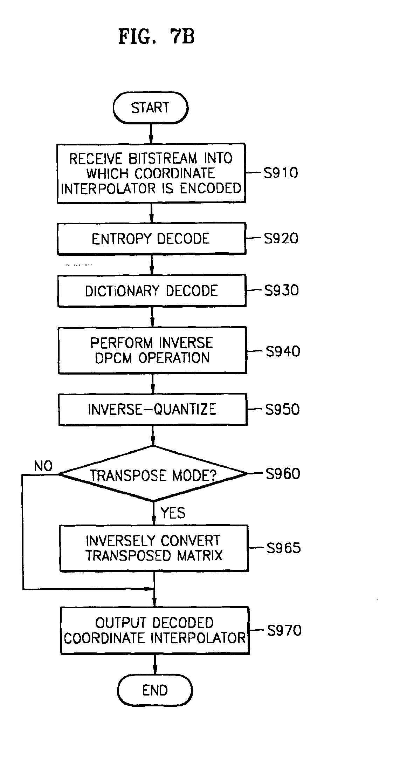

Hereinafter, an apparatus and a method for decoding an encoded coordinate interpolator according to the present invention will be described with reference to FIGS. 7A and 7B.

FIG. 7A is a block diagram of an apparatus for decoding an encoded coordinate interpolator according to a preferred embodiment of the present invention, and FIG. 7B is a flowchart of a method for decoding an encoded coordinate interpolator according to a preferred embodiment of the present invention.

Referring to FIG. 7A, an apparatus for decoding an encoded coordinate interpolator according to the present invention includes an entropy decoder 800, which entropy-decodes an input bitstream and thus generates data to be dictionary-decoded, including symbols of DPCMed differential data, a symbol flag, position indexes for the symbols, and a DPCM operation mode, a dictionary decoder 810, which generates differential data based on the symbols of the data to be dictionary-encoded and their position indexes, an inverse DPCM processor 830, which generates quantized data by performing a predetermined inverse DPCM operation on dfferential data based on a DPCM operation mode, an inverse quantizer 850, which generates retrieved key value data by inverse-quantizing quantized data, and a key value header decoder 870, which decodes information required for decoding a coordinate interpolator from the input bitstream and outputs the information to the dictionary decoder 810, the inverse DPCM processor 830, and the inverse quantizer 850.

A method for decoding an encoded coordinate interpolator according to the present invention will be described in the following with reference to FIG. 7B.

A bitstream, into which a coordinate interpolator is encoded, is input into the entropy decoder 800 in step S910, and then the entropy decoder 800 decodes the input bitstream in step S920. If the input bitstream has been encoded in an occurrence mode, the entropy decoder 800 outputs symbols of each vertex and their position indexes to the dictionary decoder. On the other hand, if the input bitstream has been encoded in an incremental mode, the entropy decoder 800 outputs a symbol flag indicating the existence of symbols and the position indexes for the symbols to the dictionary decoder 810.

The dictionary decoder 810 generates differential data by decoding the symbols and position indexes input from the entropy decoder 800 in an occurrence mode or decoding the symbol flag and position indexes input from the entropy decoder 800 in an incremental mode, depending on the input dictionary encoding mode, and outputs the generated differential data to the inverse DPCM processor 830 in step S930.

The inverse DPCM processor 830 generates quantized key value data by performing one of an inverse temporal DPCM operation, an inverse spatial DPCM operation, and an inverse spatio-temporal DPCM operation on the differential data input from the dictionary decoder 810, depending on the decoded DPCM operation mode of the input differential data and outputs the quantized key value data to the inverse quantizer 850 in step S940.

The inverse quantizer 850 inverse-quantizes the quantized key value data input from the inverse DPCM processor 830 using the minimum values among the data of each of the components and the maximum data range, which are input from the key value header decoder 870, in step S950.

The inverse quantizer 850 checks if a matrix of the inverse-quantized key value data has been converted into a transpose matrix during the encoding process in step S960 and inversely converts the transpose matrix if the matrix of the inverse-quantized key value data has been transposed, in step S965.

The inverse quantizer 850 outputs key value data of a retrieved coordinate interpolator in step S970.

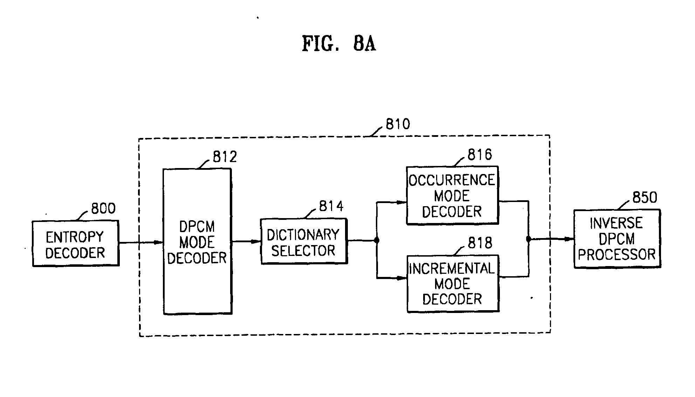

Hereinafter, the apparatus and method for decoding an encoded coordinate interpolator will be described more fully with reference to FIGS. 8A through 9B.

The entropy decoder 800 decodes a bitstream indicating a DPCM mode from an input bitstream first and then decodes an array of data including bSelFlag, nKVACodingBit, nQMin, and nQMax.

In the encoding process, bSelFlag and nKVACodingBit are set to 1 and 0, respectively, at first. If bSelFlag is decoded into 1, the entropy decoder 800 decodes nKVACodingBit, nQMin, and nQMax. On the other hand, bSelFlag is decoded into 0, the entropy decoder 800 decodes nQMin only.

The entropy decoder 800 decodes nDicModeSelect indicating a dictionary encoding mode after the decoding of the array of the data bSelFlag, nKVACodingBit, nQMin and nQMax. Depending on the value of nDicModeSelect, bitstreams to be decoded are divided into two different kinds, which will be described in the following.

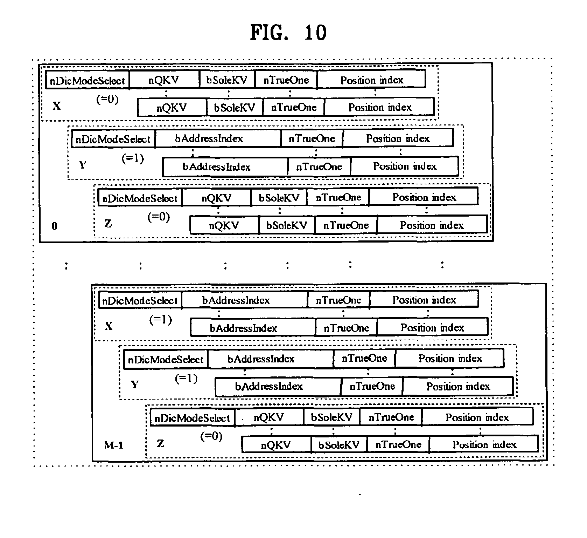

FIG. 10 is a diagram illustrating each vertex of a coordinate interpolator and the structure of a bitstream of component data of each of the vertexes. As shown in FIG. 10, if nDicModeSelect is 0, a bitstream includes symbols and position indexes, which have been encoded in an occurrence mode encoder. On the other hand, if nDicModeSelect is 1, a bitstream includes a symbol flag and position indexes, which have been encoded in a incremental mode encoder.

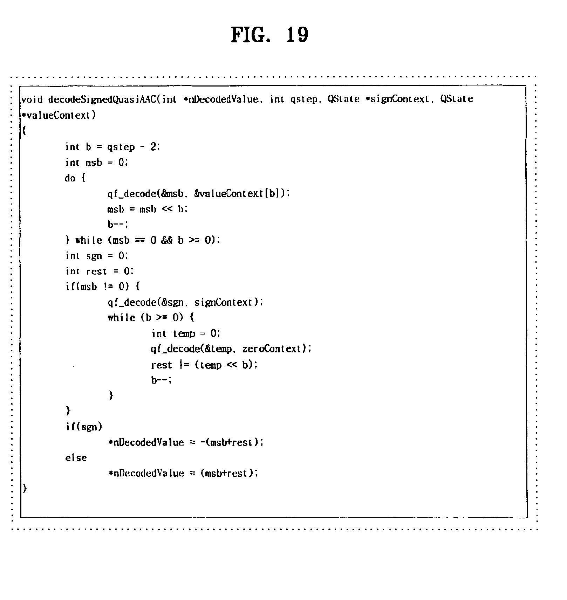

The entropy decoder according to the present invention has been described above as using a function decodeSignedQuasiAAC( ), which is realized in program codes shown in FIG. 19. In the function decodeSignedQuasiAAC( ), an adaptive-arithmetic-encoded bitstream is decoded using a context regarding input values and their signs. In particular, in the function decodeSignedQuasiAAC( ), bits subsequent to a sign bit is decoded using a zero context. The entropy decoder 800 outputs the decoded data to the dictionary decoder 810.

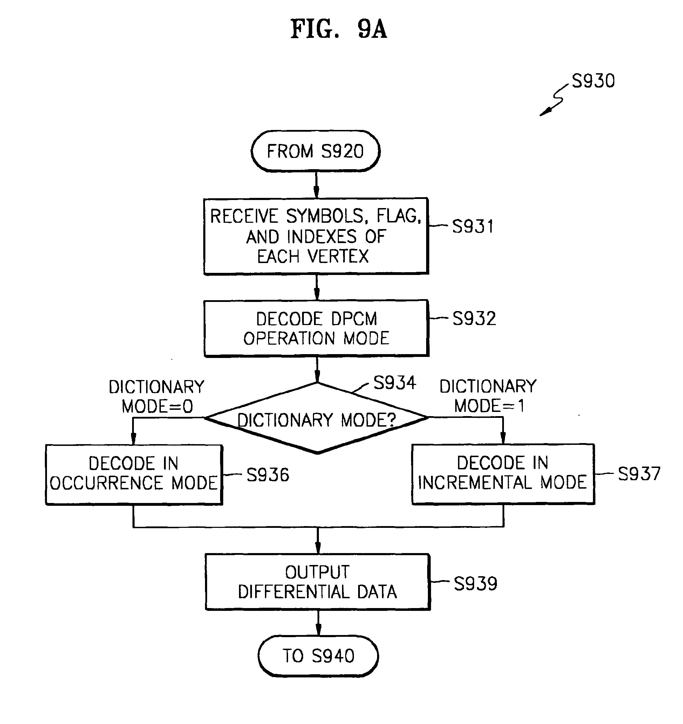

FIG. 8A is a block diagram of the dictionary decoder 810 according to the present invention, and FIG. 9A is a flowchart of dictionary encoding.

As shown in FIG. 8A, the dictionary decoder 810 includes a DPCM mode decoder 812, which retrieves a DPCM mode of each vertex input thereinto, a dictionary mode selector 814, which selects a dictionary decoding mode of each of the input vertices, an occurrence mode decoder 816, which receives symbols of each component of each of the vertices and position indexes for the symbols from the dictionary mode selector 814 and retrieves differential data, and an incremental mode decoder 818, which receives a symbol flag and the position indexes for the symbols from the dictionary mode selector 814 and retrieves differential data.

Referring to FIG. 9A, entropy-decoded component data of each of the vertices including the symbols, the symbol flag, and the position indexes are input into the DPCM mode decoder 812 in step S931.

The DPCM mode decoder 812 decodes the mode of an inverse DPCM operation, which will be performed on differential data of each of the components of each of the vertices in the inverse DPCM processor 830, before dictionary-decoded differential data are output to the inverse DPCM processor 830 in step S932.

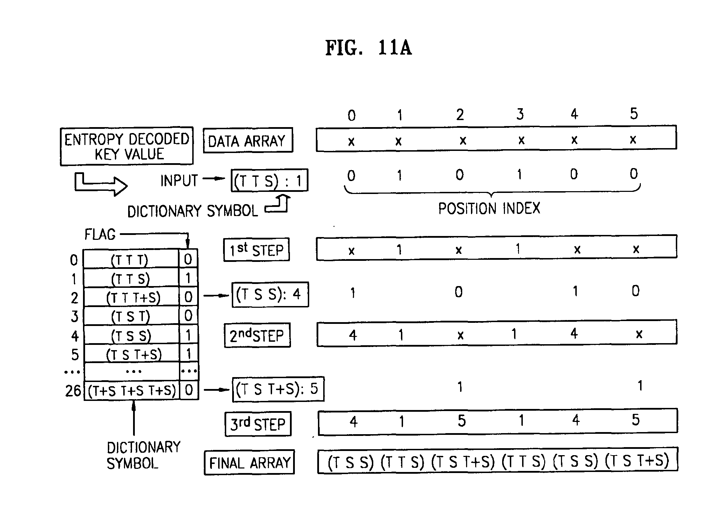

Hereinafter, DPCM mode decoding will be described with reference to FIG. 11A.

DPCM mode decoding is the same as incremental mode decoding, which will be described later, except that the number of symbols representing combinations of DPCM modes of each of the components of each of the vertices is fixed at 27 and accordingly, the size of a symbol table is also fixed at 27.

The DPCM mode decoder 812 receives a DPCM mode flag and records symbols corresponding to the DPCM mode flag in a data array following input position indexes.

For example, as shown in FIG. 11 A, symbols corresponding to the input DPCM mode flag are 1 (T T S), 4 (T S S), and 5 (T S T+S) and their respective indexes are (0 1 0 1 0 0), (1 0 1 0), and (1 1). Accordingly, an array of data (X 1 X 1 X X) is retrieved using the symbol 1 and its position index (0 1 0 1 0 0), an array of data (4 1 X 1 4 X) is retrieved using the symbol 4 and its position index (1 0 1 0), and an array of data (4 1 5 1 4 5) is retrieved using the symbol 5 and its position index (1 1).

The retrieved data array (4 1 5 1 4 5) is converted into an array of combinations of DPCM modes (T S S) (T T S) (T S T+S) (T T S) (T S S) (T S T+S). Accordingly, it is possible to identify what kind of DPCM has been performed on each of the components of each of the vertices based on the retrieved data array.

The DPCM mode decoder 812 outputs the differential data of each of the components of each of the vertices to the dictionary mode selector 814 together with the decoded DPCM mode information.

The dictionary mode selector 814 outputs the component data of each of the vertices input from the DPCM mode decoder 812 to the occurrence mode decoder 816 or the incremental mode decoder 818, depending on the value of nDicModeSelect of each of the components of each of the vertices in step S934.

The dictionary mode selector 814 outputs the component data of a vertex to the occurrence mode decoder 816 if nDicModeSelect is 0 and outputs the component data of the vertex to the incremental mode decoder 818 if nDicModeSelect is 1.

The occurrence mode decoder 816 retrieves the symbol data and position indexes of each of the components into differential data in step S936.

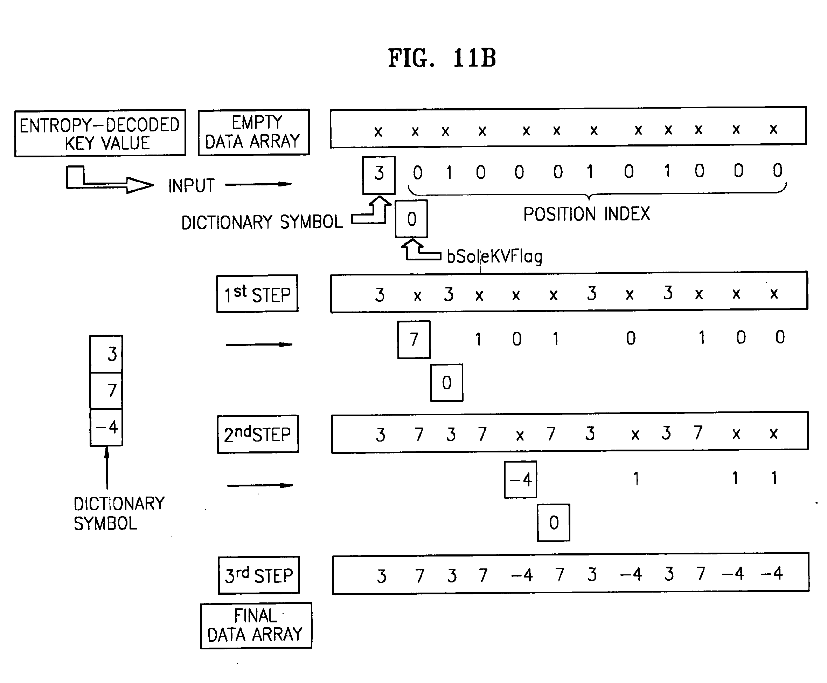

FIG. 11 B is a diagram illustrating an example of occurrence mode decoding. Referring to FIG. 11 B, the occurrence mode decoder 816 receives symbol data from the dictionary mode selector 814 and checks bSoleKV and nTrueOne.

If bSoleKV indicates there are a plurality of input symbols in differential data and nTrueOne indicates position indexes have not been inversed, the occurrence mode decoder 816 retrieves differential data by inserting the input symbols in their respective places in a data array, which are indicated by their respective position indexes.

For example, the occurrence mode decoder 816 receives symbols 3, 7, and -4 sequentially and their respective position indexes (0 1 0 0 0 1 0 1 0 0 0), (1 0 1 0 1 0 0), and (1 1 1).

The occurrence mode decoder 816 records the first symbol 3 in a differential data array following the position index (0 1 0 0 0 1 0 1 0 0 0). Accordingly, (3 X 3 X X X 3 X 3 X X X) is obtained by inserting the symbol 3 into places in the differential data array, which correspond to the places where 1 is located in the position index (0 1000101000).

The occurrence mode decoder 816 retrieves the next symbol 7. During retrieving the symbol 7, the positions of the symbol 3 in the differential data array are not considered so that the position index for the symbol 7 is not (0 1 0 1 0 0 0 1 0 0) but (1 0 1 0 1 0 0).

The occurrence mode decoder 816 records the symbol 7 in a first place among places in the differential data array, which are not occupied by the symbol 3, and then records the symbol 7 in places in the differential data array, which correspond to the places where 1 is located in the position index (1 0 1 0 1 0 0). Accordingly, after retrieving the symbol 7, the differential data array is (3 7 3 7 X 7 3 X 3 7 X X).

The occurrence mode decoder 816 retrieves the symbol -4 following the index (111), and thus the resulting differential data array is (3 7 3 7 -4 7 3 -4 3 7 4 -4).

If bSoleKV is set to 1, this means that there is only one input symbol in differential data, and there is no position index for the input symbol. Accordingly, the occurrence mode decoder 816 records the input symbol into a first place in a blank differential data array and performs a process for retrieving the next symbols.

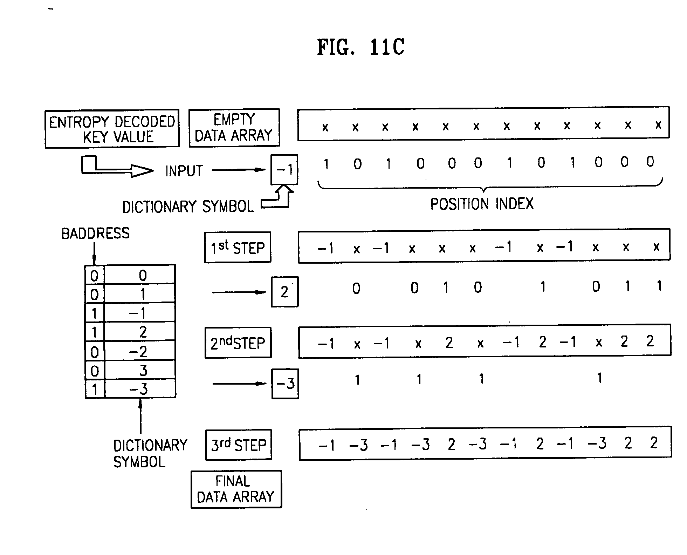

The incremental mode decoder 818 retrieves the symbol flag and position indexes of each of the components into differential data in step S936. Hereinafter, incremental mode decoding will be described with reference to FIG. 11C.

The incremental mode decoder 818 receives the symbol flag indicating whether or not symbols exist in differential data, nTrueOne indicating whether or not position indexes have been inversed, and the position indexes from the dictionary mode selector 814.

The incremental mode decoder 818 decodes symbols included in the differential data based on the input symbol flag. In a symbol table used for incremental mode decoding, like the one used for the incremental mode encoding, symbols are arranged in column in the order from a symbol having the lowest absolute value to a symbol having the greatest absolute value, and between two symbols having the same absolute value, the one having a positive value is arranged in a higher row than the other. The size of a symbol flag is $2^{nKVCodingBit+1}-1$ where nKVCodingBit represents the number of quantization bits decoded in the entropy decoder 800. Accordingly, if a symbol flag is (0 0 1 1 0 0 1), the incremental mode decoder 818 decodes -1, 2, and -3 as symbols existing in the differential data.

The position indexes input after the symbol flag are (1 0 1 0 0 0 1 0 1 0 0 0), (0 0 1 0 1 0 11), and (1 1 1 1) and correspond to the symbols -1, 2, and 3, respectively.

The incremental mode decoder 818 records the symbol -1 in places in a differential data array corresponding to the places where 1 is located in the position index (1 0 1 0 0 0 1 0 1 0 0 0) so that the resulting data array is (-1 X -1 X X X -1 X -1 X X X).

Next, the incremental mode decoder 818 retrieves the symbol 2 by recording 2 in places in the differential data array corresponding to the places where 1 is located in the position index (0 0 1 0 1 0 1 1). During the retrieving of the symbol 2, the positions of the first symbol -1 in the differential data array are not considered so that the resulting differential data array is (-1 X - 1 X 2 X -1 2 -1 X 2 2).

The incremental mode decoder 81 retrieves the symbol -3 by recording -3 in places in the differentia data array corresponding to the places where 1 is located in the position index (1 1 1 1) so that the resulting differential data array is (-1 -3 -1 -3 2-3-1 2-1 -3 2 2).

The occurrence mode decoder 816 and the incremental mode decoder 818 retrieves the differential data of each of the components of each of the vertices and outputs the retrieved differential data to the inverse DPCM processor 830 in step S939.

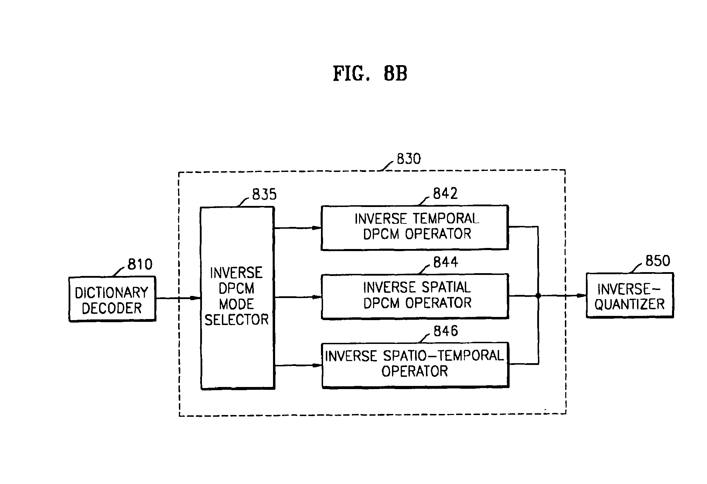

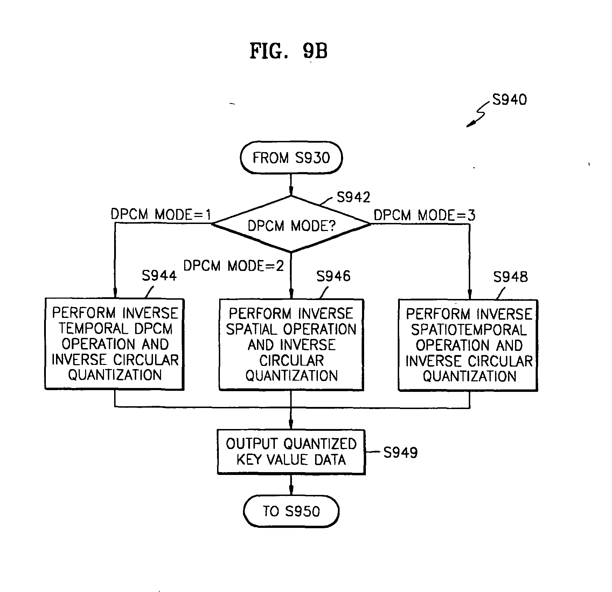

FIG. 8B is a block diagram of the inverse DPCM processor 830 according to the present invention, and FIG. 9B is a flowchart of an inverse DPCM operation.

Referring to FIG. 8B, the inverse DPCM processor 830 according to the present invention includes an inverse temporal DPCM operator 842, which performs an inverse temporal DPCM operation and an inverse circular quantization operation on input differential data and then outputs quantized key value data of a coordinate interpolator, an inverse spatial DPCM operator 844, which performs an inverse spatial DPCM operation and an inverse circular quantization operation on input differential data and then outputs quantized key value data, an inverse spatio-temporal DPCM operator 846, which performs an inverse spatio-temporal DPCM operation and an inverse circular quantization operation on input differential data and then outputs quantized key value data, and an inverse DPCM mode selector 835, which outputs differential data input thereinto to one of the inverse temporal DPCM operator 842, the inverse spatial DPCM operator 844, and the inverse spatio-temporal DPCM operator 846.

Referring to FIG. 9B, the inverse DPCM mode selector 835 determines an inverse DPCM operation, which will be performed on differential data input thereinto, depending on the DPCM operation mode of each of the components of each of the vertices retrieved in the DPCM mode decoder 812, and outputs the input differential data of each of the components of each of the vertices following the inverse DPCM operation mode in step S942.

Each of the DPCM operators 842, 844, and 846 performs an inverse DPCM operation and an inverse circular quantization operation on the differential data input thereinto at the same time.

The inverse temporal DPCM operator 842 performs an inverse temporal DPCM operation on the input differential data following Equation (8) in step S944, the inverse temporal DPCM operator 844 performs an inverse spatial operation on the input differential data following Equation (9) in step S946, and the inverse spatio-temporal DPCM operator 846 performs an inverse spatio-temporal DPCM operation on the differential data input thereinto following Equation (10) in step S948.

$$\widetilde{V}_{i,j} = D_{i,j} + \widetilde{V}_{i-1,j} \quad \cdots (8)$$

$$\widetilde{V}_{i,j} = D_{i,j} + \widetilde{V}_{i,\mathrm{Ref}} \quad \cdots (9)$$

$$\widetilde{V}_{i,j} = D_{i,j} + \{\widetilde{V}_{i-1,j} + (\widetilde{V}_{i,\mathrm{Ref}} - \widetilde{V}_{i-1,\mathrm{Ref}})\} \quad \cdots (10)$$

In Equations (8) through (10), $\widetilde{V}_{i,j}$ represents quantized key value data of a j-th vertex in an i-th keyframe, $D_{i,j}$ represents differential data of the j-th vertex in the i-th keyframe, and Ref represents a reference vertex.

In Equations (9) and (10), if $\widetilde{V}_{i,\mathrm{Ref}}$ or $\{\widetilde{V}_{i-1,j} + (\widetilde{V}_{i,\mathrm{Ref}} - \widetilde{V}_{i-1,\mathrm{Ref}})\}$ is smaller than a minimum value among the quantized key value data of each of the components, the minimum value is used instead of $\widetilde{V}_{i,\mathrm{Ref}}$ or $\{\widetilde{V}_{i-1,j} + (\widetilde{V}_{i,\mathrm{Ref}} - \widetilde{V}_{i-1,\mathrm{Ref}})\}$. { If $\widetilde{V}_{i,\mathrm{Ref}}$ or $\{\widetilde{V}_{i-1,j} + (\widetilde{V}_{i,\mathrm{Ref}} - \widetilde{V}_{i-1,\mathrm{Ref}})\}$ is greater than a maximum value among the quantized key value data of each of the components, the maximum value is used instead of $\widetilde{V}_{i,\mathrm{Ref}}$ or $\{\widetilde{V}_{i-1,j} + (\widetilde{V}_{i,\mathrm{Ref}} - \widetilde{V}_{i-1,\mathrm{Ref}})\}$. ¯

Each of the DPCM operators 842, 844, and 846 performs an inverse DPCM operation using Equation (11) and performs an inverse circular quantization operation at the same time so as to extend the range of differential data, which has been reduced during the encoding process.

$$InverseCircularQuantization(\widetilde{X}_i): \quad \cdots (11)$$
$$X_i' = \widetilde{X}_i - (nQM\bar{a}x - nQMin + 1) \quad (if\ \widetilde{X}_i \geq 0)$$
$$X_i' = \widetilde{X}_i + (nQMax - nQMin + 1) \quad (otherwise)$$
$$\hat{X}_i = \hat{X}_{i-1} + \widetilde{X}_i \quad (if\ nQMin \leq \hat{X}_{i-1} + \widetilde{X}_i \leq nQMax)$$
$$\hat{X}_i = \hat{X}_{i-1} + X_i' \quad (f\ nQMin \leq \hat{X}_{i-1} + X_i' \leq nQMax)$$

In Equation (11), $\widetilde{X}_i$ is an input value which is the same as $D_{i,j}$, $\hat{X}_{i-1}$ is a previously inversely circular-quantized value, like $\widetilde{V}_{i,\mathrm{Ref}}$ or $\{\widetilde{V}_{i-1,j} + (\widetilde{V}_{i,\mathrm{Ref}} - \widetilde{V}_{i-1,\mathrm{Ref}})\}$. nQMax and nQMin represent a maximum value and a minimum value, respectively, among DPCMed differential data.

The inverse DPCM processor 830 outputs key value data of each of the components of each of the vertices, which have been inverse-DPCMed and inversely circular-quantized, to the inverse quantizer 850 in step S949.

Referring to FIG. 7B, the inverse quantizer 850 converts minimum values fMin_X, fMin_Y, and fMin_Z, which are input from the key value header decoder 870, among input component data and a maximum range value fMax into binary numbers following Equation (2) and inverse-quantizes the quantized key value data input from the inverse DPCM processor 830 by substituting fMin_X, fMin_Y, fMin_Z, and fMax into Equation (12).

$$\hat{V}_{i,j,x} = fMin\_X + \frac{\widetilde{V}_{i,j,x}}{2^{nKVQBits} - 1} \times fMax \quad \cdots (12)$$

$$\hat{V}_{i,j,y} = fMin\_Y + \frac{\widetilde{V}_{i,j,y}}{2^{nKVQBits} - 1} \times fMax$$

$$\hat{V}_{i,j,z} = fMin\_Z + \frac{\widetilde{V}_{i,j,z}}{2^{nKVQBits} - 1} \times fMax$$

In Equation (12), nKVQBits represents a quantization bit size used for inverse quantization.

The inverse quantizer 850 must output the inverse-quantized key value data of each of the components of each of the vertices in the form of matrix shown in Table 2. In order to do this, the inverse quantizer 850 checks before outputting the inverse-quantized key value data if the mode of the inverse-quantized key value data is a transpose mode in step S960. If the mode of the inverse-quantized key value data is a transpose mode, the inverse quantizer 850 generates and outputs decoded key value data of a coordinate interpolator by inversely converting the transpose matrix in step S965.

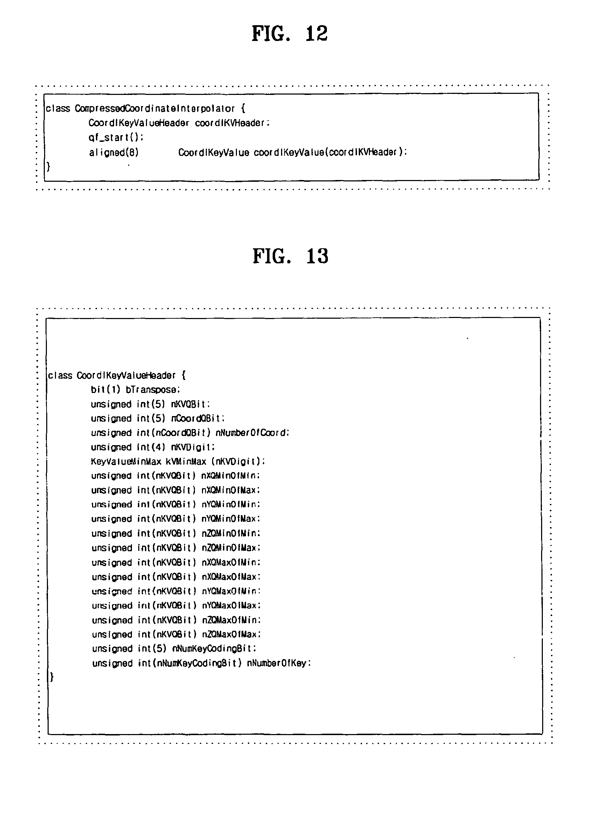

Hereinafter, SDL program codes for decoding an encoded bitstream and variables used in such program codes will be described with reference to FIGS. 12 through 18.

FIG. 12 shows an uppermost class for reading a bitstream of a compressed coordinate interpolator.

CoordlKeyValueHeader and CoordlKeyValue are classes for reading key value information corresponding to key value field data of a conventional coordinate interpolator node. A function qf_start() is used to initialize an arithmetic decoder before reading AAC-encoded data.

FIG. 13 shows program codes used for generating a bitstream using key value header information required for decoding key value data.

Key value header data are decoded after key header data are decoded. The key value header includes the number of vertices, a parameter for quantization of key value data, and maximum and minimum values for quantization. bTranspose is a flag indicating whether a transpose mode or a vertex mode. If bTranspose is 1, a transpose mode is selected in a decoding process. On the other hand, if bTranspose is 0, a vertex mode is selected. nKVQBit is a quantization bit used for retrieving floating-point numbers through inverse quantization. nCoordQBit is the size of bits used to represent nNumberOfCoord, which represents the number of vertices. nKVDigit is used after inverse quantization and represents the maximum number of effective digits of key value data. A class KeyValueMinMax retrieves a minimum value used for inverse quantization and a maximum data range, which are divided into their mantissas and exponents. Other pieces of header information include a maximum value and minimum values among maximum values and minimum values among the quantized key value data of each of the components of each of the vertices. Specifically, nXQMinOfMax represents a minimum value among maximum values among the quantized key value data of the x component of each of the vertices. nNumKeyCodingBit represents the bit size of nNumberOfKey, which represents the number of key data. The information including nXQMinOfMax and nNumberOfKey is required to decode key value data.

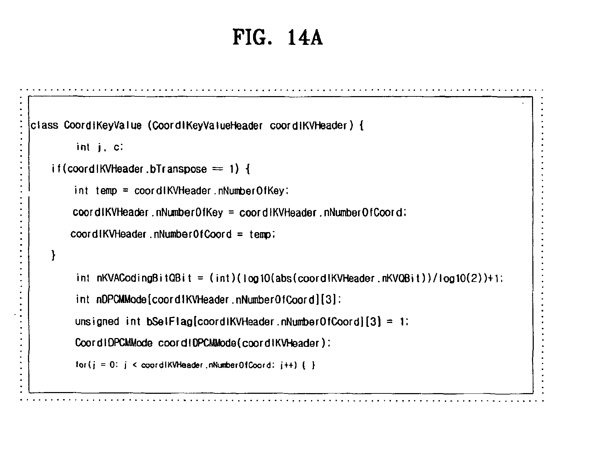

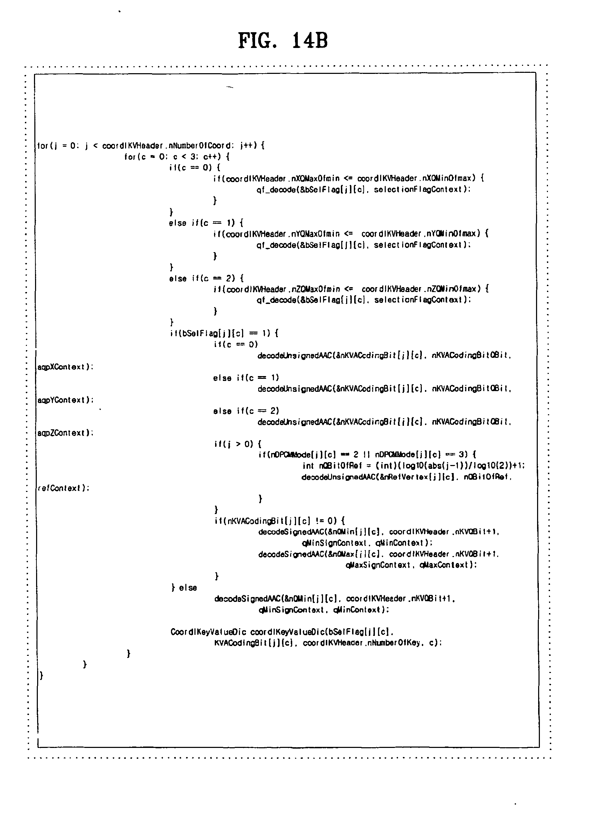

FIGS. 14A and 14B are diagrams illustrating program codes for realizing an apparatus for decoding a DPCM mode according to the present invention. The meaning of each variable shown in FIGS. 14A and 14B is as follows.

nDPCMMode represents a DPCM mode of each component (x, y, z) of each vertex. When nDPCMMode is set to 1, 2, or 3, it represents a temporal DPCM mode, a spatial DPCM mode, or a spatio-temporal DPCM mode, respectively.

bSelFlag is a flag for selecting each of the components of each of the vertices. Only components of each of the vertices, for which bSelFlag is set to 1, are encoded using the dictionary encoder 340. selectionFlagContext is a context for reading bSelFlag.

nKVACodingBit represents encoding bits for each of the components of each of the vertices. aqpXContext, aqpYContext, and aqpZContext are contexts for the X-axis, the Y-axis, and the Z-axis, respectively, which are used to read nKVACodingBit.

nRefVertex is an index of a reference vertex for all the vertices. refContext is a context for reading nRefVertex.

nQMin represents a minimum value among DPCMed differential data of each of the components of each of the vertices. qMinContext represents a context for reading nQMin, and qMinSignContext is a context for reading the sign of nQMin.

nQMax represents a maximum value among DPCMed differential data of each of the components of each of the vertices. qMaxContext is a context for reading nQMax, and aMaxSignContext is a context for reading the sign of nQMax.

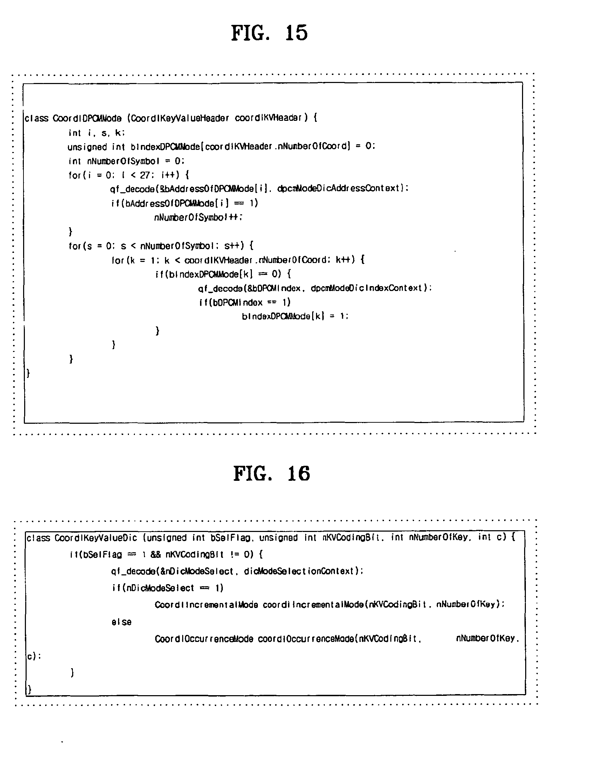

FIG. 15 is a diagram illustrating program codes for decoding a DPCM mode according to the present invention, and the meaning of each variable shown in FIG. 15 is as follows.

bAddressOfDPCMMode indicates the usage of each DPCM dictionary symbol, which is constituted by a combination of DPCM modes for each component in a DPCM dictionary table. Each of the vertices includes three components, and three different kinds of DPCM T, S, and T+S modes may exist in the components of each of the vertices. As shown in Table 3, there are 27 dictionary symbols representing combinations of the three DPCM modes. dpcmModeDicAddressContext is a context for reading bAddressOfDPCMMode.

bDPCMIndex indicates which DPCM symbol has been used for each of the vertices. dpcmModeIDicIndexContext is a context for reading bDPCMIndex.

FIG. 16 is a diagram illustrating program codes for decoding a dictionary encoding mode according to the present invention, and the meaning of each variable shown in FIG. 16 is as follows.

dDicModeSelect indicates which dictionary encoding mode has been used during dictionary encoding. When dDicModeSelect is 1, it means that the dictionary encoding mode is an incremental mode. On the other hand, if dDicModeSelect is 0, it means that the dictionary encoding mode is an occurrence mode.

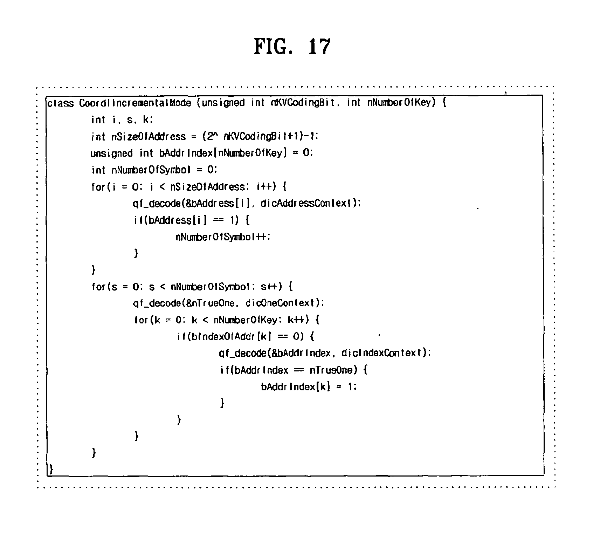

FIG. 17 is a diagram illustrating program codes for realizing an incremental mode decoding method according to the present invention, and the meaning of each variable shown in FIG. 17 is as follows.

bAddress indicates whether or not incremental mode dictionary symbols representing quantized key values have been used. The number of symbols used in an incremental mode table is $2^{nKVCodingBit+1} - 1$. dicAddressContext is a context for reading bAddress.

nTrueOne indicates whether or not index data have been inversed. When nTrueOne is 1, a value 1 in a position index is considered as a real value indicating the position of a symbol. When nTrueOne is 0, a value 0 in the position index is considered as a real value indicating the position of the symbol.

bAddrIndex indicates an incremental mode symbol used for each of the components of each of the vertices. dicIndexContext is a context for reading bAddrIndex.

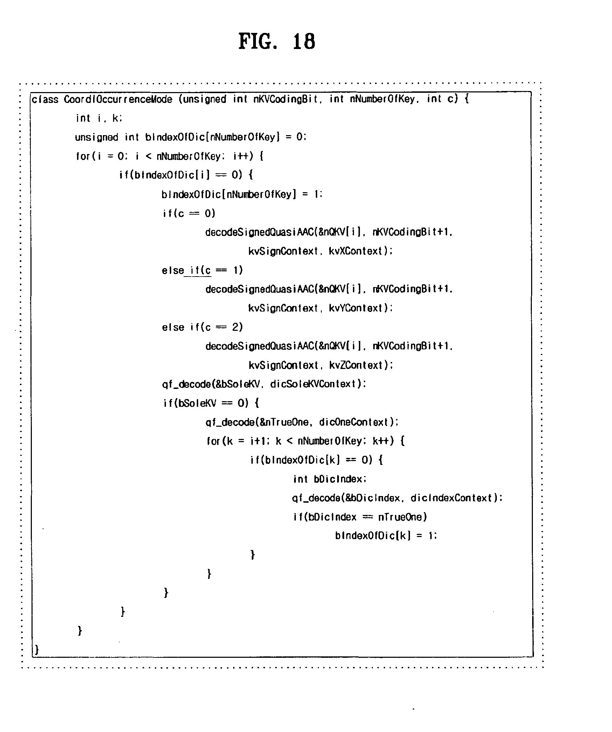

FIG. 18 is a diagram illustrating program codes for realizing an occurrence mode decoding method according to the present invention, and the meaning of each variable shown in FIG. 18 is as follows.

nQKV includes occurrence mode symbols, which are quantized key value data. kvXContext, kvYContext, and kvZContext are contexts for reading nQKV, and kvSignContext is a context for reading the sign of nQKV.

bSoleKV indicates whether or not a decoded symbol appears in differential data only one time. If a decoded symbol appears in differential data only one time, soleKV is set to 1. dicSoleKVContext is a context for reading bSoleKV.

bDicIndex indicates which dictionary symbol has been used for each of the components of each of the vertices. dicIndexContext is a context for reading bDicIndex.

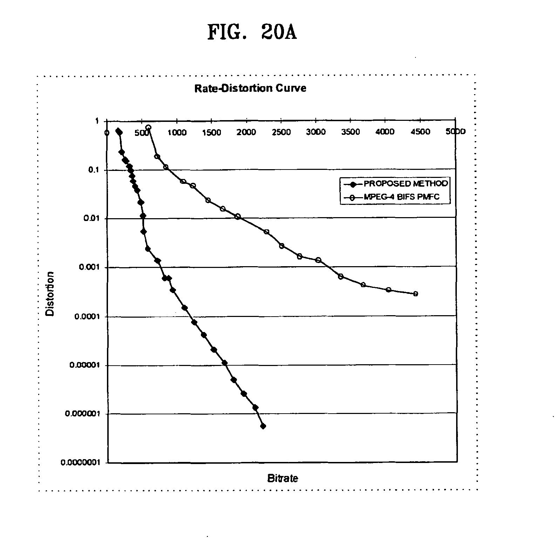

FIG. 20A is a rate-distortion curve showing the results of performance tests performed on the method for encoding and decoding key value data of a coordinate interpolator according to the present invention and a conventional MPEG-4 BIFS PMFC method. In particular, FIG. 20A shows the relationship between the degree of distortion and an encoded bit rate in the case of encoding 38 key value data of a coordinate interpolator. As shown in FIG. 20A, the method for encoding and decoding key value data of a coordinate interpolator has a higher efficiency than the conventional MPEG-4 BIFS PMFC method.

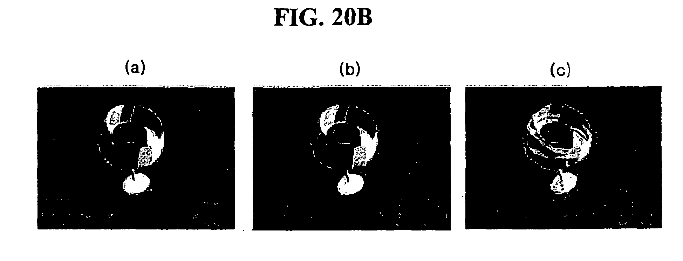

FIG. 20B includes three diagrams (a), (b), and (c). Specifically, in FIG. 20B, (a) shows animation data, (b) shows animation data which are encoded/decoded according to the present invention, and (c) shows animation data which are encoded/decoded following a conventional encoding/decoding method. As shown in FIG. 20B, the method for encoding and decoding key value data of a coordinate interpolator according to the present invention can provide an animation of higher quality, which is much closer to the original animation, than the conventional encoding/decoding method.

The method and the apparatus for encoding/decoding key value data of a coordinate interpolator so as to represent a keyframe-based animation according to the present invention have been described above with reference to the accompanying drawings, in which a preferred embodiment of the invention are shown. It is obvious to one skilled in the art that the DPCM operation, which is employed in the preferred embodiment of the present invention, is not limitedly applied only to key value data of a coordinate interpolator but also to vertex data including a plurality of components so as to represent a three-dimensional object.

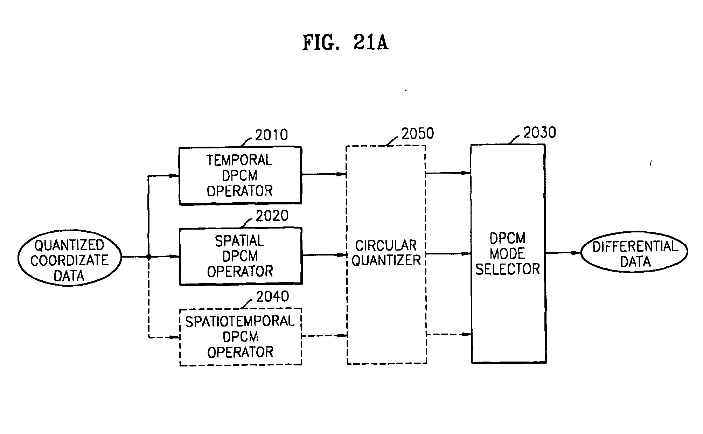

FIG. 21A is a block diagram of a DPCM operator according to the present invention. Referring to FIG. 21A, a DPCM operator according to the present invention includes a temporal DPCM operator 2010, which generates differential data between data of a vertex constituting a 3D object varying with the passage of time at a predetermined moment of time and data of the vertex at another predetermined moment of time, a spatial DPCM operator 2020, which generates differential data between data of a vertex and data of a reference vertex at a predetermined moment of time, and a DPCM mode selector 2030, which outputs the smaller ones between the differential data input from the temporal DPCM operator 2010 and the differential data input from the spatial DPCM operator 2020.

Preferably, the DPCM operator according to the present invention further includes a spatio-temporal DPCM operator 2040, which calculates differential data between differential data between a vertex and a reference vertex in a key frame and their corresponding differential data in another key frame by performing a temporal DPCM operation on the results of a spatial DPCM operation. Even in a case where the spatio-temporal DPCM operator 2040 is further provided, the DPCM mode selector 2030 still outputs the smallest ones among the differential data input from the temporal DPCM operator 2010, the differential data input from the spatial DPCM operator 2020, and the differential data input from the spatio-temporal DPCM operator 2040.

The operation of the elements of the DPCM operator according to the present invention is the same as that of the corresponding elements of the DPCM processor, which has been described above.

The DPCM operator according to the present invention receives quantized coordinate data of vertices constituting a 3D object from the outside.

The temporal DPCM operator 2010 calculates differential data between coordinate data of vertices when the vertices represent the current object and coordinate data of the vertices when the vertices were representing the previous object, using Equation (3).

The spatial DPCM operator 2020 calculates differential data between vertices, on which a DPCM operation has been performed, and currently input vertices, which exist on the same temporal axis as the DPCMed vertices, using Equation (5), selects a vertex having the smallest differential data as a reference vertex, and outputs the differential data.

The DPCM mode selector 2030 calculates the sizes of the differential data input from the temporal DPCM operator 2010 and the differential data input from the spatial DPCM operator 2020 and outputs the differential data having a smaller size together with DPCM operation information.

The spatio-temporal DPCM operator 2040, which may be further included in the DPCM operator according to a preferred embodiment of the present invention, performs the aforementioned spatial DPCM operation on quantized coordinate data of the 3D object using Equation (6) and performs the aforementioned temporal DPCM operation on the results of performing a spatial DPCM operation on a current vertex and the results of performing a spatial DPCM operation on a previous vertex.

A circular quantizer 2050, which is included in the DPCM operator according to a preferred embodiment of the present invention, reduces the range of differential data input thereinto using Equation (7).

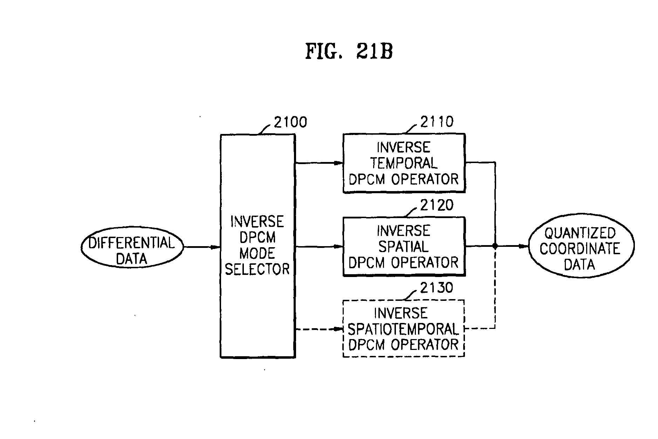

FIG. 21 B is a block diagram of an inverse DPCM operator, which converts differential data generated by the DPCM operator according to the present invention into quantized coordinate data.

An inverse DPCM operator according to the present invention includes an inverse temporal DPCM operator 2110, which performs an inverse DPCM operation on differential data between data of a vertex at a predetermined moment of time and data of the vertex at another predetermined moment of time, an inverse spatial DPCM operator 2120, which performs an inverse spatial DPCM operation on differential data between data of a vertex and data of a reference vertex at a predetermined moment of time, and an inverse DPCM mode selector 2100, which outputs differential data to the inverse temporal DPCM operator 2110 or the inverse spatial DPCM operator 2120, depending on the mode of a DPCM operation, which has been performed on the differential data.

Preferably, the inverse DPCM operator according to the present invention further includes an inverse spatio-temporal DPCM operator 2130, which performs an inverse spatio-temporal DPCM operation on the results of the current inverse spatial DPCM operation and the results of the previous inverse spatial DPCM operation.

The operation of the elements of the inverse DPCM operator according to the present invention is the same as that of the corresponding elements of the inverse DPCM processor, which has been described above.

Differential data to be retrieved into quantized coordinate data are input into the inverse DPCM mode selector 2100. Then, the inverse DPCM mode selector 2100 identifies what kind of DPCM has been performed on component data of each vertex included in the input differential data and outputs the component data of each of the vertices to the inverse temporal DPCM operator 2110, the inverse spatial DPCM operator 2120, and the inverse spatio-temporal DPCM operator 2130.

The inverse temporal DPCM operator 2110 performs an inverse temporal DPCM operation on the differential data input thereinto, following Equation (8), the inverse spatial DPCM operator 2120 performs an inverse spatial DPCM operation on the differential data input thereinto, following Equation (9), and the inverse spatio-temporal DPCM operator 2130 performs an inverse spatio-temporal DPCM operation on the differential data input thereinto, following Equation (10).

If the input differential data have been circular quantized, each of the DPCM operators 2110, 2120, and 2130 performs an inverse circular quantization operation on their respective inverse-DPCMed differential data using Equation (11) so as to extend the range of their respective inverse-DPCMed differential data.

The present invention can be realized as computer-readable codes written on a computer-readable recording medium. Here, the computer-readable recording medium includes any kind of recording medium which can be read by a computer system. For example, the computer-readable recording medium may include a ROM, a RAM, a CD-ROM, a magnetic tape, a floppy disk, an optical data storage, a carrier wave (transmission through the Internet), and the like. The computer-readable recording medium can be decentralized to computer systems connected over a network, and a computer can read the recording medium in a decentralized way.

The method and the apparatus for encoding key value data of a coordinate interpolator according to the present invention have a high encoding efficiency by encoding key value data of a coordinate interpolator in consideration of differential data between coordinate data of vertices in different keyframes as well as differential data between coordinate data of vertices of the coordinate interpolator.

In addition, the method and the apparatus for encoding key value data of a coordinate interpolator according to the present invention have an even higher encoding efficiency by representing differential data using symbols corresponding to the values of the differential data and position indexes for their respective symbols.

While this invention has been particularly shown and described with reference to preferred embodiments thereof, it will be understood by those skilled in the art that various changes in form and details may be made therein without departing from the scope of the invention as defined by the appended claims.

**Claims**

1.  An apparatus for three-dimensional animation of keyframe-based graphics such as three dimensional computer games or virtual reality computer applications by generating differential data between quantized coordinate data of vertices constituting an object moving in accordance with the passage of time, the apparatus comprising:

    a spatial DPCM operator (323) arranged to generate differential data between each of the vertices and a reference vertex corresponding to the vertices at a predetermined moment of time; and
    a temporal DPCM operator (321) arranged to generate differential data between coordinate data of each vertex varying in accordance with the passage of time;
    **characterised by** a DPCM mode selector (335) arranged to output the smaller ones between the differential data input from the temporal DPCM operator and the differential data input from the spatial DPCM operator.

2.  The apparatus of claim 1, further comprising a spatio-temporal DPCM operator (325) which is arranged to calculate first differential data obtained by performing a spatial DPCM operation on the same vertex at different moments of time and performs a temporal DPCM operation on the first differential data so as to generate second differential data, wherein the DPCM mode selector (335) outputs the smallest ones among the differential data input from the temporal DPCM operator, the differential data input from the spatial DPCM operator, and the differential data input from the spatio-temporal DPCM operator.

3.  The apparatus of claim 2, wherein the reference vertex is a vertex, having the smallest number of bits required for encoding differential data between itself and current vertices subjected to a spatial DPCM operation, among vertices which have been DPCMed prior to the current vertices subjected to a spatial DPCM operation.

4.  The apparatus of claim 2 or 3, wherein the DPCM mode selector (335) calculates the entropy of the differential data input from the temporal DPCM operator, the differential data input from the spatial DPCM operator, and the differential data input from the spatio-temporal DPCM operator and selects the smallest differential data among the results of the corresponding operation.

5.  The apparatus of claim 2, 3 or 4, further comprising a circular quantizer (330) which generates differential data having a reduced size by performing a predetermined operation on the temporal-DPCMed differential data, the spatial-DPCMed differential data, the spatio-temporal-DPCMed differential data, and a maximum range of differential data,
    wherein the DPCM mode selector (335) selects the smallest differential data among the results of performing the predetermined operation on the temporal-DPCMed differential data, the spatial-DPCMed differential data, the spatio-temporal-DPCMed differential data, and a maximum range of differential data;
    wherein the predetermined operation is defined by the following equation for the quantization of a value $X_i$ to give a circular quantized value $\tilde{X}_i$ :

$$CircularQuanti\,zation(X_i): \qquad \cdots(7)$$
$$X'_i = X_i - (nQMax - nQMin + 1) \quad (if\ X_i \geq 0)$$
$$X'_i = X_i + (nQMax - nQMin + 1) \quad (otherwise)$$
$$\widetilde{X}_i = \min(|X_i|, |X'_i|)$$

where nQMax is the maximum value among the DPCMed differential data, and nQMin is the minimum value among the DPCMed differential data.

**6.** An apparatus for three-dimensional animation of keyframe-based graphics such as three dimensional computer games or virtual reality computer applications by generating quantized coordinate data of vertices constituting an object varying in accordance with the passage of time by performing a predetermined inverse DPCM operation on differential data between coordinate data of vertices, the apparatus comprising:

an inverse spatial DPCM operator (844) which is arranged to perform an inverse DPCM operation on differential data between each of the vertices and a reference vertex corresponding to the vertices at a predetermined moment of time; and
an inverse temporal DPCM operator (842) which is arranged to perform an inverse DPCM operation on differential data of each vertex varying in accordance with the passage of time;
**characterised by** an inverse DPCM mode selector (835) which outputs differential data input thereinto to the inverse temporal DPCM operator or the inverse spatial DPCM operator depending on a DPCM operation mode included in the input differential data.

**7.** The apparatus of claim 6, further comprising an inverse spatio-temporal DPCM operator (846)_which is arranged to perform an inverse temporal DPCM operation on the results of a current inverse spatial DPCM operation and the results of a previous inverse spatial DPCM operation,
wherein the inverse DPCM mode selector (835) outputs the differential data to one of the inverse temporal DPCM operator, the inverse spatial DPCM operator, and the inverse spatio-temporal DPCM operator, depending on the DPCM operation mode.

**8.** The apparatus of claim 7, wherein the inverse temporal DPCM operator (842), the inverse spatial DPCM operator (844), and the inverse spatio-temporal DPCM operator (846) extend the range of the differential data by performing an inverse circular quantization operation on the differential data and the maximum range of the differential data of each of the components of each of the vertices.
wherein the inverse circular quantization operation of an input value is defined by the equation:

$$InverseCircularQuantization(\widetilde{X}_i): \qquad \cdots(11)$$
$$X_i' = \widetilde{X}_i - (nQMax - nQMin + 1) \qquad (if\ \widetilde{X}_i \geq 0)$$
$$X_i' = \widetilde{X}_i + (nQMax - nQMin + 1) \qquad (otherwise)$$
$$\hat{X}_i = \hat{X}_{i-1} + \widetilde{X}_i \qquad (if\ nQMin \leq \hat{X}_{i-1} + \widetilde{X}_i \leq nQMax)$$
$$\hat{X}_i = \hat{X}_{i-1} + X_i' \qquad (f\ nQMin \leq \hat{X}_{i-1} + X_i' \leq nQMax)$$

where $\widetilde{X}_i$ is an input value $\hat{X}_{i-1}$ is a previously inversely circular-quantized value, like $\widetilde{V}_{i,\mathrm{Re}\,f}$ or $\{\widetilde{V}_{i-1,j} + (\widetilde{V}_{i,\mathrm{Re}\,f}\ \widetilde{V}_{i-1,\mathrm{Re}f})\}$, and nQMax and nQMin represent a maximum value and a minimum value, respectively, among DPCMed differential data.

**9.** A method for generating differential data between quantized coordinate data of vertices constituting an object moving in time, the method comprising:

(b) performing a spatial DPCM operation, in which differential data between each of the vertices and a reference vertex corresponding to the vertices at a predetermined moment of time are generated; **characterised by**
(a) performing a temporal DPCM operation, in which differential data between coordinate data of each vertex varying in accordance with the passage of time are generated; and
(e) outputting the smaller ones between the temporal-DPCMed differential data and the spatial-DPCMed differential data.

10. The method of claim 9, further comprising before step (e), (c) calculating first differential data obtained by performing a spatial DPCM operation on the same vertex at different moments of time and performing a temporal DPCM operation on the first differential data so as to generate second differential data,
wherein in step (e), the smallest ones among the temporal-DPCMed differential data, the spatial-DPCMed differential data, and the spatio-temporal-DPCMed differential data are output.

11. The method of claim 10, wherein the reference vertex is a vertex, having the smallest number of bits required for encoding differential data between itself and current vertices subjected to a spatial DPCM operation, among vertices which have been DPCMed prior to the current vertices subjected to a spatial DPCM operation.

12. The method of claim 9 or 10, wherein in step (e), the entropy of the differential data input from the temporal DPCM operator, the differential data input from the spatial DPCM operator, and the differential data input from the Spatio-temporal DPCM operator are calculated and then the smallest differential data among the results of the performed operation are selected.

13. The method of claim 10, 11 or 12 further comprising before step (e), (d) performing a circular quantization operation, in which differential data having a reduced size are generated by performing a predetermined operation on the temporal-DPCMed differential data, the spatial-DPCMed differential data, the spatio-temporal-DPCMed differential data, and a maximum range of differential data,
wherein in step (e), the smallest differential data among the results of performing the predetermined operation on the temporal-DPCMed differential data, the spatial-DPCMed differential data, the spatio-temporal-DPCMed differential data, and the maximum range of differential data are output; and
the circular quantization operation is defined by the following equation for the quantization of a value $X_i$ to give a circular quantized value $\tilde{X}_i$ :

$$CircularQuanti zation(X_i): \qquad \cdots(7)$$
$$X'_i = X_i - (nQMax - nQMin + 1) \quad (if\ X_i \geq 0)$$
$$X'_i = X_i + (nQMax - nQMin + 1) \quad (otherwise)$$
$$\tilde{X}_i = \min(|X_i|, |X'_i|)$$

where nQMax is the maximum value among the DPCMed differential data, and nQMin is the minimum value among the DPCMed differential data.

14. A method for generating quantized coordinate data of vertices constituting an object varying in accordance with the passage of time by performing a predetermined inverse DPCM operation on differential data between coordinate data of vertices, the method comprising:

(a) selecting an inverse DPCM operation to be performed on the differential data depending on a DPCM operation mode included in the differential data; and
(b) performing the selected inverse DPCM operation,

wherein the selected inverse DPCM operation is an operation selected from a plurality of operations including an inverse temporal DPCM operation, in which an inverse DPCM operation is performed on differential data of each vertex varying in accordance with the passage of time, and an inverse spatial DPCM operation, in which an inverse DPCM operation is performed on differential data between each of the vertices and a reference vertex corresponding to the vertices at a predetermined moment of time.

**15.** The method of claim 14, wherein the operation is selected from the plurality of operations further including an inverse spatio-temporal DPCM operation, in which an inverse temporal DPCM operation is performed on the results of a current inverse spatial DPCM operation and the results of a previous inverse spatial DPCM operation.

**16.** The method of claim 17, wherein in the inverse temporal DPCM operation, the inverse spatial DPCM operation, and the inverse spatio-temporal DPCM operation, the range of the differential data is extended by performing an inverse circular quantization operation on the differential data and the maximum range of the differential data of each of the components of each of the vertices;
wherein the inverse circular quantization operation of an input value is defined by the equation:

$$InverseCircularQuantization(\tilde{X}_i): \qquad \cdots(11)$$

$$X_i' = \tilde{X}_i - (nQMax - nQMin + 1) \qquad (if\ \tilde{X}_i \geq 0)$$

$$X_i' = \tilde{X}_i + (nQMax - nQMin + 1) \qquad (otherwise)$$

$$\hat{X}_i = \hat{X}_{i-1} + \tilde{X}_i \qquad (if\ nQMin \leq \hat{X}_{i-1} + \tilde{X}_i \leq nQMax)$$

$$\hat{X}_i = \hat{X}_{i-1} + X_i' \qquad (f\ nQMin \leq \hat{X}_{i-1} + X_i' \leq nQMax)$$

where $\tilde{X}_i$ is an input value $\hat{X}_{i-1}$ is a previously inversely circular-quantized value, like $\tilde{V}_{i,\mathrm{Ref}}$ or $\{\tilde{V}_{i-1,j} + (\tilde{V}_{i,\mathrm{Ref}} - \tilde{V}_{i-1,\mathrm{Ref}})\}$, and nQMax and nQMin represent a maximum value and a minimum value, respectively, among DPCMed differential data.

## Patentansprüche

**1.** Vorrichtung zur dreidimensionalen Animation von Graphiken auf Keyframe-Basis wie z.B. dreidimensionale Computerspiele oder VR-(Virtuelle Realität)-Computeranwendungen durch Erzeugen von Differentialdaten zwischen quantisierten Koordinatendaten von Scheitelpunkten, die ein Objekt bilden, das sich im zeitlichen Verlauf bewegt, wobei die Vorrichtung Folgendes umfasst:

einen räumlichen DPCM-Operator (323) zum Erzeugen von Differentialdaten zwischen jedem der Scheitelpunkte und einem Referenzscheitelpunkt, der den Scheitelpunkten an einem vorbestimmten Zeitpunkt entspricht; und
einen zeitlichen DPCM-Operator (321) zum Erzeugen von Differentialdaten zwischen Koordinatendaten jedes Scheitelpunkts, der im zeitlichen Verlauf variiert;
**gekennzeichnet durch** einen DPCM-Modusselektor (335) zum Ausgeben der kleineren aus den vom zeitlichen DPCM-Operator eingegebenen Differentialdaten und den vom räumlichen DPCM-Operator eingegebenen Differentialdaten.

**2.** Vorrichtung nach Anspruch 1, die ferner einen räumlich-zeitlichen DPCM-Operator (325) zum Berechnen erster Differentialdaten, die durch Ausführen einer räumlichen DPCM-Operation am selben Scheitelpunkt zu unterschiedlichen Zeitpunkten erhalten wurden, und zum Ausführen einer zeitlichen DPCM-Operation an den ersten Differentialdaten umfasst, um zweite Differentialdaten zu erzeugen,
wobei der DPCM-Modusselektor (335) die kleinsten aus den vom zeitlichen DPCM-Operator eingegebenen Differentialdaten, den vom räumlichen DPCM-Operator eingegebenen Differentialdaten und den vom räumlich-zeitlichen DPCM-Operator eingegebenen Differentialdaten ausgibt.

**3.** Vorrichtung nach Anspruch 2, wobei der Referenzscheitelpunkt ein Scheitelpunkt mit der kleinsten Anzahl von Bits, die nötig sind, um Differentialdaten zwischen sich selbst und aktuellen, einer räumlichen DPCM-Operation unterzogenen Scheitelpunkten zu codieren, aus Scheitelpunkten ist, die vor den aktuellen einer räumlichen DPCM-Operation unterzogenen Scheitelpunkten DPCM-moduliert wurden.

**4.** Vorrichtung nach Anspruch 2 oder 3, wobei der DPCM-Modusselektor (335) die Entropie der vom zeitlichen DPCM-Operator eingegebenen Differentialdaten, der vom räumlichen DPCM-Operator eingegebenen Differentialdaten und der vom räumlich-zeitlichen DPCM-Operator eingegebenen Differentialdaten berechnet und die kleinsten Differentialdaten aus den Ergebnissen der entsprechenden Operation auswählt.

5. Vorrichtung nach Anspruch 2, 3 oder 4, die ferner einen kreisförmigen Quantisierer (330) umfasst, der Differentialdaten mit einer reduzierten Größe durch Ausführen einer vorbestimmten Operation an den zeitlich DPCM-modulierten Differentialdaten, den räumlich DPCM-modulierten Differentialdaten und den räumlich-zeitlich DPCM-modulierten Differentialdaten und einem Maximalbereich von Differentialdaten erzeugt,
wobei der DPCM-Modusselektor (335) die kleinsten Differentialdaten aus den Ergebnissen des Ausführens der vorbestimmten Operation an den zeitlich DPCM-modulierten Differentialdaten, den räumlich DPCM-modulierten Differentialdaten, den räumlich-zeitlich DPCM-modulierten Differentialdaten und einem Maximalbereich von Differentialdaten auswählt;
wobei die vorbestimmte Operation durch die folgende Gleichung zum Quantisieren eines Wertes $X_i$ definiert wird, um einen kreisförmig quantisierten Wert $\tilde{X}_i$ zu erhalten:

$$KreisQuantisierung(X_i): \qquad\qquad ...(7)$$

$$X'_i = X_i - (nQMax - nQMin + 1) \qquad (wenn\ X_i \geq 0)$$

$$X'_i = X_i + (nQMax - nQMin + 1) \qquad (sonst)$$

$$\tilde{X}_i = \min(\,|X_i|\,,\,|X'_i|\,)$$

wobei nQMax der Höchstwert unter den DPCM-modulierten Differentialdaten und nQMin der Mindestwert unter den DPCM-modulierten Differentialdaten ist.

6. Vorrichtung zur dreidimensionalen Animation von Graphiken auf Keyframe-Basis wie z.B. dreidimensionale Computerspiele oder VR-(Virtuelle Realität)-Computeranwendungen durch Erzeugen von quantisierten Koordinatenwerten von Scheitelpunkten, die ein Objekt bilden, das im zeitlichen Verlauf variiert, durch Ausführen einer vorbestimmten inversen DPCM-Operation an Differentialdaten unter Koordinatendaten von Scheitelpunkten, wobei die Vorrichtung Folgendes umfasst:

einen inversen räumlichen DPCM-Operator (844) zum Ausführen einer inversen DPCM-Operation an Differentialdaten zwischen jedem der Scheitelpunkte und einem Referenzscheitelpunkt, der den Scheitelpunkten zu einem vorbestimmten Zeitpunkt entspricht; und
einen inversen zeitlichen DPCM-Operator (842) zum Ausführen einer inversen DPCM-Operation an Differentialdaten jedes Scheitelpunkts, der im zeitlichen Verlauf variiert;
**gekennzeichnet durch** einen inversen DPCM-Modusselektor (835), der Differentialdaten ausgibt, die vom inversen zeitlichen DPCM-Operator oder dem inversen räumlichen DPCM-Operator in diesen eingegeben wurden, je nach dem in den eingegebenen Differentialdaten enthaltenen DPCM-Operationsmodus.

7. Vorrichtung nach Anspruch 6, die ferner einen inversen räumlich-zeitlichen DPCM-Operator (846) zum Ausführen einer inversen zeitlichen DPCM-Operation an den Ergebnissen einer aktuellen inversen räumlichen DPCM-Operation und den Ergebnissen einer vorherigen inversen räumlichen DPCM-Operation beinhaltet,
wobei der inverse DPCM-Modusselektor (835) die Differentialdaten in den inversen zeitlichen DPCM-Operator, den inversen räumlichen DPCM-Operator und den inversen räumlich-zeitlichen DPCM-Operator ausgibt, je nach dem DPCM-Operationsmodus.

8. Vorrichtung nach Anspruch 7, wobei der inverse zeitliche DPCM-Operator (842), der inverse räumliche DPCM-Operator (844) und der inverse räumlich-zeitliche DPCM-Operator (846) den Bereich der Differentialdaten durch Ausführen einer inversen kreisförmigen Quantisierungsoperation an den Differentialdaten und dem Maximalbereich der Differentialdaten von jeder der Komponenten jedes der Scheitelpunkte erweitern;
wobei die inverse kreisförmige Quantisierungsoperation eines Eingangswerts durch die folgende Gleichung definiert wird:

$$InverseKreisQuantisierung(\tilde{X}_i): \qquad\qquad ...(11)$$

$$X_i{}' = \tilde{X}_i - (nQMax - nQMin + 1) \qquad (wenn\ \tilde{X}_i \geq 0)$$

$$X_i{}' = \tilde{X}_i + (nQMax - nQMin + 1) \qquad (sonst)$$

$$\hat{\tilde{X}}_i = \hat{\tilde{X}}_{i-1} + \tilde{X}_i (wenn\ nQMin \leq \hat{\tilde{X}}_{i-1} + \tilde{X}_i \leq nQMax)$$

$$\hat{\tilde{X}}_i = \hat{\tilde{X}}_{i-1} + X_i{}' \qquad (wenn\ nQMin \leq \hat{\tilde{X}}_{i-1} + X_i{}' \leq nQMax)$$

wobei $\tilde{X}_i$ ein Eingangswert ist, $\hat{X}_{i-1}$, ein zuvor invers kreisförmig quantisierter Wert ist, wie $\tilde{V}_{i,Ref}$ oder $\{\tilde{V}_{i-1,j} + (\tilde{V}_{i,Ref} - \tilde{V}_{i-1,Ref})\}$ und nQMax und nQMin jeweils einen Maximalwert und einen Minimalwert aus DPCM-modulierten Differentialdaten repräsentieren.

9. Verfahren zum Erzeugen von Differentialdaten aus quantisierten Koordinatendaten von Scheitelpunkten, die ein sich in der Zeit bewegendes Objekt bilden, wobei das Verfahren Folgendes beinhaltet:

(b) Ausführen einer räumlichen DPCM-Operation, bei der Differentialdaten zwischen jedem der Scheitelpunkte und einem Referenzscheitelpunkt, der den Scheitelpunkten zu einem bestimmten Zeitpunkt entspricht, erzeugt werden; **gekennzeichnet durch**
(a) Ausführen einer zeitlichen DPCM-Operation, bei der Differentialdaten zwischen Koordinatendaten jedes im zeitlichen Verlauf variierenden Scheitelpunkts erzeugt werden; und
(e) Ausgeben der kleineren aus den zeitlich DPCM-modulierten Differentialdaten und den räumlich DPCM-modulierten Differentialdaten.

10. Verfahren nach Anspruch 9, das vor Schritt (e) ferner (c) das Berechnen erster Differentialdaten beinhaltet, die durch Ausführen einer räumlichen DPCM-Operation an demselben Scheitelpunkt zu unterschiedlichen Zeitpunkten und Ausführen einer zeitlichen DPCM-Operation an den ersten Differentialdaten erhalten werden, um zweite Differentialdaten zu erzeugen,
wobei in Schritt (e) die kleinsten aus den zeitlich DPCM-modulierten Differentialdaten und den räumlich DPCM-modulierten Differentialdaten und den räumlich-zeitlich DPCM-modulierten Differentialdaten ausgegeben werden.

11. Verfahren nach Anspruch 10, wobei der Referenzscheitelpunkt ein Scheitelpunkt mit der kleinsten Anzahl von Bits, die nötig sind, um Differentialdaten zwischen sich selbst und aktuellen, einer räumlichen DPCM-Operation unterzogenen Scheitelpunkten zu codieren, aus Scheitelpunkten ist, die vor den aktuellen einer räumlichen DPCM-Operation unterzogenen Scheitelpunkten DPCM-moduliert wurden.

12. Verfahren nach Anspruch 9 oder 10, wobei in Schritt (e) die Entropie der vom zeitlichen DPCM-Operator eingegebenen Differentialdaten, der vom räumlichen DPCM-Operator eingegebenen Differentialdaten und der vom räumlich-zeitlichen DPCM-Operator eingegebenen Differentialdaten berechnet werden und dann die kleinsten Differentialdaten aus den Ergebnissen der ausgeführten Operation ausgewählt werden.

13. Verfahren nach Anspruch 10, 11 oder 12, das vor Schritt (e) ferner (d) das Ausführen einer kreisförmigen Quantisierungsoperation beinhaltet, bei der Differentialdaten mit einer reduzierten Größe durch Ausführen einer vorbestimmten Operation an den zeitlich DPCM-modulierten Differentialdaten, den räumlich DPCM-modulierten Differentialdaten, den räumlich-zeitlich DPCM-modulierten Differentialdaten und einem Maximalbereich von Differentialdaten erzeugt werden,
wobei in Schritt (e) die kleinsten Differentialdaten aus den Ergebnissen des Ausführens der vorbestimmten Operation an den zeitlich DPCM-modulierten Differentialdaten, den räumlich DPCM-modulierten Differentialdaten, den räumlich-zeitlich DPCM-modulierten Differentialdaten und dem Maximalbereich der Differentialdaten ausgegeben werden; und
die kreisförmige Quantisierungsoperation durch die folgende Gleichung für die Quantisierung eines Wertes $X_i$ de-

finiert wird, um einen kreisförmig quantisierten Wert $\tilde{X}_i$ zu erhalten:

$$KreisQuantisierung(X_i): \qquad\qquad ...(7)$$

$$X'_i = X_i - (nQMax - nQMin + 1) \qquad (wenn\ X_i \geq 0)$$

$$X'_i = X_i + (nQMax - nQMin + 1) \qquad (sonst)$$

$$\tilde{X}_i = \min(\ |X_i|\ ,\ |X'_i|\ )$$

wobei nQMax der Maximalwert aus den DPCM-modulierten Differentialdaten ist und nQMin der Mindestwert aus den DPCM-modulierten Differentialdaten ist.

**14.** Verfahren zum Erzeugen von quantisierten Koordinatendaten von Scheitelpunkten, die ein im zeitlichen Verlauf variierendes Objekt bilden, durch Ausführen einer vorbestimmten inversen DPCM-Operation an Differentialdaten zwischen Koordinatendaten von Scheitelpunkten, wobei das Verfahren Folgendes beinhaltet:

(a) Auswählen einer inversen DPCM-Operation, die an den Differentialdaten auszuführen ist, je nach einem in den Differentialdaten enthaltenen DPCM-Betriebsmodus; und
(b) Ausführen der gewählten inversen DPCM-Operation,

wobei die gewählte inverse DPCM-Operation eine Operation ist, die aus mehreren Operationen einschließlich einer inversen zeitlichen DPCM-Operation ausgewählt ist, bei der eine inverse DPCM-Operation an Differentialdaten jedes im zeitlichen Verlauf variierenden Scheitelpunkts ausgeführt wird, und einer inversen räumlichen DPCM-Operation, bei der eine inverse DPCM-Operation an Differentialdaten zwischen jedem der Scheitelpunkte und einem Referenzscheitelpunkt ausgeführt wird, der den Scheitelpunkten zu einem vorbestimmten Zeitpunkt entspricht.

**15.** Verfahren nach Anspruch 14, wobei die Operation aus mehreren Operationen ausgewählt wird, die eine inverse räumlich-zeitliche DPCM-Operation beinhaltet, bei der eine inverse zeitliche DPCM-Operation an den Ergebnissen einer aktuellen inversen räumlichen DPCM-Operation ausgeführt wird, und den Ergebnissen einer vorherigen inversen räumlichen DPCM-Operation.

**16.** Verfahren nach Anspruch 17, wobei bei der inversen zeitlichen DPCM-Operation, der inversen räumlichen DPCM-Operation und der inversen räumlich-zeitlichen DPCM-Operation, der Bereich der Differentialdaten durch Ausführen einer inversen kreisförmigen Quantisierungsoperation an den Differentialdaten und dem Maximalbereich der Differentialdaten von jeder der Komponenten jedes der Scheitelpunkte erweitert wird;
wobei die inverse kreisförmige Quantisierungsoperation eines Eingangswerts durch die folgende Gleichung definiert wird:

$$InverseKreisQuantisierung(\tilde{X}_i): \qquad\qquad ...(11)$$

$$X_i' = \tilde{X}_i - (nQMax - nQMin + 1) \qquad (wenn\ \tilde{X}_i \geq 0)$$

$$X_i' = \tilde{X}_i + (nQMax - nQMin + 1) \qquad (sonst)$$

$$\hat{X}_i = \hat{X}_{i-1} + \tilde{X}_i (wenn\ nQMin \leq \hat{X}_{i-1} + \tilde{X}_i \leq nQMax)$$

$$\hat{X}_i = \hat{X}_{i-1} + X_i' \qquad (wenn\ nQMin \leq \hat{X}_{i-1} + X_i' \leq nQMax)$$

wobei $\tilde{X}_i$ ein Eingangswert ist, $\hat{X}_{i-1}$ ein zuvor invers kreisförmig quantisierter Wert ist, wie $\tilde{V}_{i,Ref}$ oder $\{\tilde{V}_{i-1,j} + (\tilde{V}_{i,Ref} - \tilde{V}_{i-1,Ref})\}$, und nQMax und nQMin jeweils einen Maximalwert bzw. einen Minimalwert repräsentieren, aus den DPCM-modulierten Differentialdaten.

**Revendications**

1. Appareil d'animation tridimensionnelle de graphiques à base d'images clés tels que des jeux informatiques tridimensionnels ou des applications informatiques de réalité virtuelle en générant des données différentielles entre des données de coordonnées quantifiées de sommets constituant un objet se déplaçant dans le temps, l'appareil comprenant :

   un opérateur MICD spatial (323) agencé pour générer des données différentielles entre chacun des sommets et un sommet de référence correspondant aux sommets à un moment prédéterminé dans le temps ; et
   un opérateur MICD temporel (321) agencé pour générer des données différentielles entre des données de coordonnées de chaque sommet variant en fonction du temps écoulé ;
   **caractérisé par** un sélecteur de mode MICD (335) agencé pour produire en sortie les données les plus petites entre les données différentielles entrées par l'opérateur MICD temporel et les données différentielles entrées par l'opérateur MICD spatial.

2. Appareil selon la revendication 1, comprenant en outre un opérateur MICD spatio-temporel (325) agencé pour calculer des premières données différentielles obtenues en exécutant une opération MICD spatiale sur le même sommet à différents moments dans le temps et exécutant une opération MICD temporelle sur les premières données différentielles de manière à générer des secondes données différentielles,
   dans lequel le sélecteur de mode MICD (335) produit en sortie les données les plus petites parmi les données différentielles entrées par l'opérateur MICD temporel, les données différentielles entrées par l'opérateur MICD spatial, et les données différentielles entrées par l'opérateur MICD spatio-temporel.

3. Appareil selon la revendication 2, dans lequel le sommet de référence est un sommet ayant le plus petit nombre de bits requis pour coder des données différentielles entre lui-même et des sommets courants faisant l'objet d'une opération MICD spatiale, parmi les sommets qui ont été MICDés avant les sommets courants faisant l'objet d'une opération MICD spatiale.

4. Appareil selon la revendication 2 ou 3,dans lequel le sélecteur de mode MICD (335) calcule l'entropie des données différentielles entrées par l'opérateur MICD temporel, des données différentielles entrées par l'opérateur MICD spatial, et des données différentielles entrées par l'opérateur MICD spatio-temporel et sélectionne les plus petites données différentielles parmi les résultats de l'opération correspondante.

5. Appareil selon la revendication 2, 3 ou 4, comprenant en outre un quantificateur circulaire (330) qui génère des données différentielles ayant une taille réduite en exécutant une opération prédéterminée sur les données différentielles MICDées temporellement, les données différentielles MICDées spatialement, les données différentielles MICDées spatio-temporellement, et une plage maximum de données différentielles,
   dans lequel le sélecteur de mode MICD (335) sélectionne les plus petites données différentielles parmi les résultats de l'exécution de l'opération prédéterminée sur les données différentielles MICDées temporellement, les données différentielles MICDées spatialement, les données différentielles MICDées spatio-temporellement, et une plage maximum de données différentielles ;
   dans lequel l'opération prédéterminée est définie par l'équation suivante pour la quantification d'une valeur $X_i$ afin de donner une valeur quantifiée circulaire $\tilde{X}_i$ :

$$QuantificationCirculaire\ (X_i)\ :\ ...(7)$$

$$X'_i = X_i - (nQMax - nQMin + 1)\ (si\ X_i \geq 0)$$

$$X'_i = X_i + (nQMax - nQMin + 1)\ (autrement)$$

$$\tilde{X}_i = \min(|X_i|, |X'_i|)$$

où nQMax est la valeur maximum parmi les données différentielles MICDées et nQMin est la valeur minimum parmi les données différentielles MICDées.

6. Appareil d'animation tridimensionnelle de graphiques à base d'images clés tels que des jeux informatiques tridimensionnels ou des applications informatiques de réalité virtuelle en générant des données de coordonnées quantifiées de sommets constituant un objet se déplaçant dans le temps en exécutant une opération MICD inverse prédéterminée sur des données différentielles entre des données de coordonnées de sommets, l'appareil comprenant :

un opérateur MICD spatial inverse (844) agencé pour exécuter une opération MICD inverse sur des données différentielles entre chacun des sommets et un sommet de référence correspondant aux sommes à un moment prédéterminé dans le temps ; et
un opérateur MICD temporel inverse (842) agencé pour exécuter une opération MICD inverse sur des données différentielles de chaque sommet variant en fonction du temps écoulé ;
**caractérisé par** un sélecteur de mode MICD inverse (835) qui produit en sortie des données différentielles entrées dans celui-ci vers l'opérateur MICD temporel inverse ou l'opérateur MICD spatial inverse en fonction d'un mode d'opération MICD inclus dans les données différentielles entrées.

7. Appareil selon la revendication 6, comprenant en outre un opérateur MICD spatio-temporel inverse (846) agencé pour exécuter une opération MICD temporelle inverse sur les résultats d'une opération MICD spatiale inverse courante et les résultats d'une opération MICD spatiale inverse précédente,
dans lequel le sélecteur de mode MICD inverse (835) produit en sortie les données différentielles vers l'un de l'opérateur MICD temporel inverse, l'opérateur MICD spatial inverse, et l'opérateur MICD spatio-temporel inverse, en fonction du mode d'opération MICD.

8. Appareil selon la revendication 7, dans lequel l'opérateur MICD temporel inverse (842), l'opérateur MICD spatial inverse (844) et l'opérateur MICD spatio-temporel inverse (846) étendent la plage des données différentielles en exécutant une opération de quantification circulaire inverse sur les données différentielles et la plage maximum des données différentielles de chacun des composants de chacun des sommets,
dans lequel l'opération de quantification circulaire inverse d'une valeur d'entrée est définie par l'équation :

$$QuantificationCirculaireInverse(\tilde{X}_i) : ...(11)$$

$$X'_i = \tilde{X}_i - (nQMax - nQMin + 1) \ (si \ \tilde{X}_i \geq 0)$$

$$X'_i = \tilde{X}_i + (nQMax - nQMin + 1) \ (autrement)$$

$$\hat{X}_i = \hat{X}_{i-1} + \tilde{X}_i \ \ (si \ nQMin \leq \hat{X}_{i-1} + \tilde{X}_i \leq nQMax)$$

$$\hat{X}_i = \hat{X}_{i-1} + X'_i \ (si \ nQMin \leq \hat{X}_{i-1} + X'_i \leq nQMax)$$

où $\tilde{X}_i$ est une valeur d'entrée, $\hat{X}_{i-1}$ est une valeur quantifiée de manière circulaire inverse précédemment, comme $\tilde{V}_{i,Ref}$ ou $\{\tilde{V}_{i-1,j} + (\tilde{V}_{i,Ref} - \tilde{V}_{i-1,Ref})\}$, et nQMax et NQmin représentent une valeur maximum et une valeur minimum, respectivement, parmi des données différentielles MICDées.

9. Procédé de génération de données différentielles entre des données de coordonnées quantifiées de sommets constituant un objet se déplaçant dans le temps, le procédé comprenant :

(b) l'exécution d'une opération MICD spatiale, dans laquelle sont générées des données différentielles entre chacun des sommets et un sommet de référence correspondant aux sommets à un moment prédéterminé dans le temps ; **caractérisé par**
(a) l'exécution d'une opération MICD temporelle, dans laquelle sont générées des données différentielles entre les données de coordonnées de chaque sommet variant en fonction du temps écoulé ; et
(e) la production en sortie des données les plus petites entre les données différentielles MICDées temporellement et les données différentielles MICDées spatialement.

**10.** Procédé selon la revendication 9, comprenant en outre avant l'étape (e), (c) le calcul de premières données différentielles obtenues en exécutant une opération MICD spatiale sur le même sommet à différents moments dans le temps et en exécutant une opération MICD temporelle sur les premières données différentielles de manière à générer des secondes données différentielles,

dans lequel à l'étape (e), les plus petites données parmi les données différentielles MICDées temporellement, les données différentielles MICDées spatialement et les données différentielles MICDées spatio-temporellement sont produites en sortie.

**11.** Procédé selon la revendication 10, dans lequel le sommet de référence est un sommet ayant le plus petit nombre de bits requis pour coder des données différentielles entre lui-même et des sommets courants faisant l'objet d'une opération MICD spatiale, parmi les sommets qui ont été MICDés avant les sommets courants faisant l'objet d'une opération MICD spatiale.

**12.** Procédé selon la revendication 9 ou 10, dans lequel à l'étape (e), l'entropie des données différentielles entrées par l'opérateur MICD temporel, des données différentielles entrées par l'opérateur MICD spatial, et des données différentielles entrées par l'opérateur MICD spatio-temporel est calculée puis les plus petites données différentielles parmi les résultats de l'opération exécutée sont sélectionnées.

**13.** Procédé selon la revendication 10, 11 ou 12, comprenant en outre avant l'étape (e), (d) l'exécution d'une quantification circulaire, dans laquelle sont générées des données différentielles ayant une taille réduite en exécutant une opération prédéterminée sur les données différentielles MICDées temporellement, les données différentielles MICDées spatialement, les données différentielles MICDées spatio-temporellement, et une plage maximum de données différentielles,

dans lequel à l'étape (e), les plus petites données différentielles parmi les résultats de l'exécution de l'opération prédéterminée sur les données différentielles MICDées temporellement, les données différentielles MICDées spatialement, les données différentielles MICDées spatio-temporellement, et la plage maximum de données différentielles sont produites en sortie ; et

l'opération de quantification circulaire est définie par l'équation suivante pour la quantification d'une valeur $X_i$ afin de donner une valeur quantifiée circulaire $\tilde{X}_i$ :

$$QuantificationCirculaire\ (X_i)\ :\ \dots(7)$$

$$X'_i\ =\ X_i\ -\ (nQMax\ -\ nQMin\ +\ 1)\ (si\ X_i\ \geq\ 0)$$

$$X'_i\ =\ X_i\ +\ (nQMax\ -\ nQMin\ +\ 1)\ (autrement)$$

$$\tilde{X}_i\ =\ \min(\left|X_i\right|,\ \left|X'_i\right|)$$

où nQMax est la valeur maximum parmi les données différentielles MICDées et nQMin est la valeur minimum parmi les données différentielles MICDées.

**14.** Procédé de génération de données de coordonnées quantifiées de sommets constituant un objet variant en fonction du temps écoulé en exécutant une opération MICD inverse prédéterminée sur des données différentielles entre des données de coordonnées de sommets, le procédé comprenant :

(a) la sélection d'une opération MICD inverse à exécuter sur les données différentielles en fonction d'un mode d'opération MICD inclus dans les données différentielles ; et

(b) l'exécution de l'opération MICD inverse sélectionnée,

dans lequel l'opération MICD inverse sélectionnée est une opération sélectionnée parmi une pluralité d'opérations comportant une opération MICD temporelle inverse, dans laquelle une opération MICD inverse est exécutée sur des données différentielles de chaque sommet variant en fonction du temps écoulé, et une opération MICD spatiale inverse, dans laquelle une opération MICD inverse est exécutée sur des données différentielles entre chacun des sommets et un sommet de référence correspondant aux sommets à un moment prédéterminé dans le temps.

15. Procédé selon la revendication 14, dans lequel l'opération est sélectionnée parmi la pluralité d'opérations comportant en outre une opération MICD spatio-temporelle inverse, dans laquelle est exécutée une opération MICD temporelle inverse sur les résultats d'une opération MICD spatiale inverse courante et les résultats d'une opération MICD spatiale inverse précédente.

16. Procédé selon la revendication 17, dans lequel dans l'opération MICD temporelle inverse, l'opération MICD spatiale inverse et l'opération MICD spatio-temporelle inverse, la plage des données différentielles est étendue en exécutant une opération de quantification circulaire inverse sur les données différentielles et la plage maximum des données différentielles de chacun des composants de chacun des sommets,
dans lequel l'opération de quantification inverse circulaire d'une valeur d'entrée est définie par l'équation

$$QuantificationCirculaireInverse(\tilde{X}_i) : ...(11)$$

$$X'_i = \tilde{X}_i - (nQMax - nQMin + 1) \ (si \ \tilde{X}_i \geq 0)$$

$$X'_i = \tilde{X}_i + (nQMax - nQMin + 1) \ (autrement)$$

$$\hat{X}_i = \hat{X}_{i-1} + \tilde{X}_i \ \ (si \ nQMin \leq \hat{X}_{i-1} + \tilde{X}_i \leq nQMax)$$

$$\hat{X}_i = \hat{X}_{i-1} + X'_i \ (si \ nQMin \leq \hat{X}_{i-1} + X'_i \leq nQMax)$$

où $\tilde{X}_i$ est une valeur d'entrée, $\hat{X}_{i-1}$ est une valeur quantifiée de manière circulaire inverse précédemment, comme $\tilde{V}_{i,Ref}$ ou $\{\tilde{V}_{i-1,j} + (\tilde{V}_{i,Ref} - \tilde{V}_{i-1,Ref})\}$m et nQMax et NQmin représentent une valeur maximum et une valeur minimum, respectivement, parmi les données différentielles MICDées.

## FIG. 1 (PRIOR ART)

KEY VALUE ENCODER

INPUT KEY VALUE DATA → $V_{i,j,c}$ → QUANTIZER → $Q_{i,j,c}^{KV}$ → DPCM OPERATOR → $E_{i,j,c}^{KV}$ → ENTROPY ENCODER

KEY VALUE DECODER

DECODED KEY VALUE DATA ← $\check{V}_{i,j,c}$ ← INVERSE QUANTIZER ← $Q_{i,j,c}^{KV}$ ← INVERSE DPCM OPERATOR ← $E_{i,j,c}^{KV}$ ← ENTROPY DECODER

COMPRESSED BITSTREAM

EP 1 592 253 B1

# FIG. 2A

EP 1 592 253 B1

## FIG. 2B

```
                    ┌─────────┐
                    │  START  │
                    └─────────┘
                         │
                         ▼
          ┌──────────────────────────────┐
          │ RECEIVE KEY VALUE DATA OF     │── S400
          │ COORDINATE INTERPOLATOR       │
          └──────────────────────────────┘
                         │
                         ▼
    YES          ◇─────────────────────◇
  ┌─────────────◇   TRANSPOSE MODE?     ◇── S410
  │              ◇─────────────────────◇
  ▼                         │ NO
┌───────────────┐          │
│ CONVERT INPUT │          │
│ KEY VALUE DATA│── S420   │
│ INTO TRANSPOSE│          │
│ MATRIX        │          │
└───────────────┘          │
  │                        │
  └────────────────────────┤
                           ▼
          ┌──────────────────────────────┐
          │   QUANTIZE KEY VALUE DATA     │── S430
          └──────────────────────────────┘
                         │
                         ▼
          ┌──────────────────────────────┐
          │ PERFORM DPCM OPERATION        │── S440
          │ AND CIRCULAR QUANTIZATION     │
          └──────────────────────────────┘
                         │
                         ▼
          ┌──────────────────────────────┐
          │     DICTIONARY ENCODING       │── S460
          └──────────────────────────────┘
                         │
                         ▼
          ┌──────────────────────────────┐
          │     ENTROPY ENCODING          │── S480
          └──────────────────────────────┘
                         │
                         ▼
                    ┌─────────┐
                    │   END   │
                    └─────────┘
```

**FIG. 3A**

EP 1 592 253 B1

FIG. 3B

EP 1 592 253 B1

## FIG. 4A

S430

FROM S420/S430

SELECT MAXIMUM AND MINIMUM VALUES AMONG COMPONENT DATA OF EACH VERTEX — S432

CALCULATE DATA RANGES OF COMPONENTS AND MAXIMUM RANGE AMONG THE DATA RANGES — S434

QUANTIZE DATA OF EACH COMPONENT — S436

TO S440

## FIG. 4B

S440

FROM S430

PERFORM TEMPORAL, SPATIAL, AND SPATIO-TEMPORAL DPCM OPERATIONS ON EACH COMPONENT OF EACH VERTEX — S442

CIRCULAR-QUANTIZE RESULTS OF EACH DPCM OPERATION — S444

CALCUATE ENTROPY OF EACH VERTEX — S446

SELECT DPCM MODE OF EACH VERTEX — S448

TO S460

FIG. 4C

S460

FROM S440

GENERATE SYMBOL FLAG AND
INDEX OF DPCM MODE —— S462

CALCULATE SYMBOL TABLE
SIZE(A) OF OCCURRENCE MODE
AND SYMBOL FLAG SIZE(B) —— S464
OF INCREMENTAL MODE

NO
A > B ? —— S466

YES

GENERATE SYMBOL
FLAG AND INDEX OF —— S469
INCREMENTAL MODE

GENERATE SYMBOL AND INDEX
OF OCCURRENCE MODE —— S468

TO S480

**FIG. 4D**

START

RECEIVE nValue AND QBit — S481

i = QBit−2 — S482

val = |nValue|
val = val >> i
bit = val & 1 — S483

S484
val ≤ 1?

NO → qf_encode(bit, zero_context) — S485

YES → qf_encode(bit, value_context[i]) — S486

S487
val = 1?

YES → if(nValue>0) sign =0 else sign =1 — S488

qf_encode(sign, sign_context) — S489

NO

i = i−1 — S490

S491
i < 0?

NO

YES

END

# FIG. 5A

THE OUTPUT OF QUANTIZER

# FIG. 5B

THE RESULT OF DPCM

## FIG. 5C

THE RESULT OF CIRCULAR DPCM

$(2^{nQBits-1}-1)$

$-(2^{nQBits-1}-1)$

## FIG. 6A

| | | | | 0 | 1 | 2 | 3 | 4 | 5 |
|---|---|---|---|---|---|---|---|---|---|
| DPCM MODES | INPUT ARRAY | | | (T S S) | (T T S) | (T S T+S) | (T T S) | (T S S) | (T S T+S) |
| | DATA ARRAY | | | 4 | 1 | 5 | 1 | 4 | 5 |
| INPUT → | (T T S) : 1 | | | 0 | 1 | 0 | 1 | 0 | 0 |

DICTIONARY SYMBOL

POSITION INDEX

FLAG

| | | FLAG | | | | | | |
|---|---|---|---|---|---|---|---|---|
| 0 | (T T T) | 0 | 1st STEP | 4 | x | 5 | x | 4 | 5 |
| 1 | (T T S) | 1 | | | | | | | |
| 2 | (T T T+S) | 0 | → (T S S): 4 | 1 | | 0 | | 1 | 0 |
| 3 | (T S T) | 0 | | | | | | | |
| 4 | (T S S) | 1 | 2nd STEP | x | x | 5 | x | x | 5 |
| 5 | (T S T+S) | 1 | | | | | | | |
| ... | ... | ... | | | | | | | |
| 26 | (T+S T+S T+S) | 0 | → (T S T+S): 5 | | | 1 | | | 1 |
| | | | 3rd STEP | x | x | x | x | x | x |

DICTIONARY SYMBOL

EP 1 592 253 B1

# FIG. 6B

EP 1 592 253 B1

## FIG. 6C

| DIFFERENCIATED KEY VALUE | DATA ARRAY | −1 | −3 | −1 | −3 | 2 | −3 | −1 | 2 | −1 | −3 | 2 | 2 |
|---|---|---|---|---|---|---|---|---|---|---|---|---|---|

INPUT → $\boxed{-1}$

DICTIONARY SYMBOL

| | 1 | 0 | 1 | 0 | 0 | 0 | 1 | 0 | 1 | 0 | 0 | 0 |

POSITION INDEX

FLAG

| 0 | 0 |
|---|---|
| 0 | 1 |
| 1 | −1 |
| 1 | 2 |
| 0 | −2 |
| 0 | 3 |
| 1 | −3 |

DICTIONARY SYMBOL

| 1st STEP | x | −3 | x | −3 | 2 | −3 | x | 2 | x | −3 | 2 | 2 |
|---|---|---|---|---|---|---|---|---|---|---|---|---|---|

→ $\boxed{2}$    0    0  1  0        1      0  1  1

| 2nd STEP | x | −3 | x | −3· | x | −3 | x | x | x | −3 | x | x |
|---|---|---|---|---|---|---|---|---|---|---|---|---|---|

→ $\boxed{-3}$    1      1      1          1

| 3rd STEP | x | x | x | x | x | x | x | x | x | x | x | x |
|---|---|---|---|---|---|---|---|---|---|---|---|---|---|

42

## FIG. 7A

EP 1 592 253 B1

# FIG. 7B

START

RECEIVE BITSTREAM INTO WHICH COORDINATE INTERPOLATOR IS ENCODED — S910

ENTROPY DECODE — S920

DICTIONARY DECODE — S930

PERFORM INVERSE DPCM OPERATION — S940

INVERSE-QUANTIZE — S950

TRANSPOSE MODE? — S960

NO

YES

INVERSELY CONVERT TRANSPOSED MATRIX — S965

OUTPUT DECODED COORDINATE INTERPOLATOR — S970

END

## FIG. 8A

EP 1 592 253 B1

FIG. 8B

# FIG. 9A

S930

FROM S920

RECEIVE SYMBOLS, FLAG, AND INDEXES OF EACH VERTEX ── S931

DECODE DPCM OPERATION MODE ── S932

DICTIONARY MODE=0     S934     DICTIONARY MODE=1

DICTIONARY MODE?

DECODE IN OCCURRENCE MODE ── S936

DECODE IN INCREMENTAL MODE ── S937

OUTPUT DIFFERENTIAL DATA ── S939

TO S940

# FIG. 9B

S940

FROM S930

S942

DPCM MODE=1    DPCM MODE?    DPCM MODE=3

DPCM MODE=2

S944
PERFORM INVERSE
TEMPORAL DPCM
OPERATION AND
INVERSE CIRCULAR
QUANTIZATION

S946
PERFORM INVERSE
SPATIAL OPERATION
AND INVERSE
CIRCULAR
QUANTIZATION

S948
PERFORM INVERSE
SPATIOTEMPORAL
OPERATION AND
INVERSE CIRCULAR
QUANTIZATION

OUTPUT QUANTIZED
KEY VALUE DATA — S949

TO S950

# FIG. 10

| nDicModeSelect | nQKV | bSoleKV | nTrueOne | Position index |
|---|---|---|---|---|

X (=0)

| | nQKV | bSoleKV | nTrueOne | Position index |
|---|---|---|---|---|

| nDicModeSelect | bAddressIndex | nTrueOne | Position index |
|---|---|---|---|

Y (=1)

| | bAddressIndex | nTrueOne | Position index |
|---|---|---|---|

| nDicModeSelect | nQKV | bSoleKV | nTrueOne | Position index |
|---|---|---|---|---|

0   Z (=0)

| | nQKV | bSoleKV | nTrueOne | Position index |
|---|---|---|---|---|

:       :       :       :       :       :

| nDicModeSelect | bAddressIndex | nTrueOne | Position index |
|---|---|---|---|

X (=1)

| | bAddressIndex | nTrueOne | Position index |
|---|---|---|---|

| nDicModeSelect | bAddressIndex | nTrueOne | Position index |
|---|---|---|---|

Y (=1)

| | bAddressIndex | nTrueOne | Position index |
|---|---|---|---|

| nDicModeSelect | nQKV | bSoleKV | nTrueOne | Position index |
|---|---|---|---|---|

M-1   Z (=0)

| | nQKV | bSoleKV | nTrueOne | Position index |
|---|---|---|---|---|

# FIG. 11A

EP 1 592 253 B1

# FIG. 11B

## FIG. 11C

EP 1 592 253 B1

EP 1 592 253 B1

## FIG. 12

```
class CompressedCoordinateInterpolator {
        CoordIKeyValueHeader coordIKVHeader;
        qf_start();
        aligned(8)        CoordIKeyValue coordIKeyValue(coordIKVHeader);
}
```

## FIG. 13

```
class CoordIKeyValueHeader {
        bit(1) bTranspose;
        unsigned int(5) nKVQBit;
        unsigned int(5) nCoordQBit;
        unsigned int(nCoordQBit) nNumberOfCoord;
        unsigned int(4) nKVDigit;
        KeyValueMinMax kVMinMax (nKVDigit);
        unsigned int(nKVQBit) nXQMinOfMin;
        unsigned int(nKVQBit) nXQMinOfMax;
        unsigned int(nKVQBit) nYQMinOfMin;
        unsigned int(nKVQBit) nYQMinOfMax;
        unsigned int(nKVQBit) nZQMinOfMin;
        unsigned int(nKVQBit) nZQMinOfMax;
        unsigned int(nKVQBit) nXQMaxOfMin;
        unsigned int(nKVQBit) nXQMaxOfMax;
        unsigned int(nKVQBit) nYQMaxOfMin;
        unsigned int(nKVQBit) nYQMaxOfMax;
        unsigned int(nKVQBit) nZQMaxOfMin;
        unsigned int(nKVQBit) nZQMaxOfMax;
        unsigned int(5) nNumKeyCodingBit;
        unsigned int(nNumKeyCodingBit) nNumberOfKey;
}
```

53

## FIG. 14A

```
class CoordIKeyValue (CoordIKeyValueHeader coordIKVHeader) {

        int j, c;
   if(coordIKVHeader.bTranspose == 1) {

       int temp = coordIKVHeader.nNumberOfKey;

       coordIKVHeader.nNumberOfKey = coordIKVHeader.nNumberOfCoord;

       coordIKVHeader.nNumberOfCoord = temp;

   }

       int nKVACodingBitQBit = (int)(log10(abs(coordIKVHeader.nKVQBit))/log10(2))+1;

       int nDPCMMode[coordIKVHeader.nNumberOfCoord][3];

       unsigned int bSelFlag[coordIKVHeader.nNumberOfCoord][3] = 1;

       CoordIDPCMMode coordIDPCMMode(coordIKVHeader);

       for(j = 0; j < coordIKVHeader.nNumberOfCoord; j++) { }
```

# FIG. 14B

```
for(j = 0; j < coordIKVHeader.nNumberOfCoord; j++) {
                for(c = 0; c < 3; c++) {
                        if(c == 0) {
                                if(coordIKVHeader.nXOMaxOfmin <= coordIKVHeader.nXOMinOfmax) {
                                        qf_decode(&bSelFlag[j][c], selectionFlagContext);
                                }
                        }
                        else if(c == 1) {
                                if(coordIKVHeader.nYOMaxOfmin <= coordIKVHeader.nYOMinOfmax) {
                                        qf_decode(&bSelFlag[j][c], selectionFlagContext);
                                }
                        }
                        else if(c == 2) {
                                if(coordIKVHeader.nZOMaxOfmin <= coordIKVHeader.nZOMinOfmax) {
                                        qf_decode(&bSelFlag[j][c], selectionFlagContext);
                                }
                        }
                        if(bSelFlag[j][c] == 1) {
                                if(c == 0)
                                        decodeUnsignedAAC(&nKVACodingBit[j][c], nKVACodingBitOBit,
aqpXContext);
                                else if(c == 1)
                                        decodeUnsignedAAC(&nKVACodingBit[j][c], nKVACodingBitOBit,
aqpYContext);
                                else if(c == 2)
                                        decodeUnsignedAAC(&nKVACodingBit[j][c], nKVACodingBitOBit,
aqpZContext);
                                if(j > 0) {
                                        if(nDPCMMode[j][c] == 2 || nDPCMMode[j][c] == 3) {
                                                int nQBitOfRef = (int)(log10(abs(j-1))/log10(2))+1;
                                                decodeUnsignedAAC(&nRefVertex[j][c], nQBitOfRef,
refContext);
                                        }
                                }
                                if(nKVACodingBit[j][c] != 0) {
                                        decodeSignedAAC(&nQMin[j][c], coordIKVHeader.nKVQBit+1,
                                                qMinSignContext, qMinContext);
                                        decodeSignedAAC(&nQMax[j][c], coordIKVHeader.nKVQBit+1,
                                                        qMaxSignContext, qMaxContext);
                                }
                        } else
                                decodeSignedAAC(&nQMin[j][c], coordIKVHeader.nKVQBit+1,
                                        qMinSignContext, qMinContext);

                        CoordIKeyValueDic coordIKeyValueDic(bSelFlag[j][c],
                                KVACodingBit[j][c], coordIKVHeader.nNumberOfKey, c);
                }
        }
}
```

# FIG. 15

```
class CoordIDPCMMode (CoordIKeyValueHeader coordIKVHeader) {
        int i, s, k;
        unsigned int bIndexDPCMMode[coordIKVHeader.nNumberOfCoord] = 0;
        int nNumberOfSymbol = 0;
        for(i = 0; i < 27; i++) {
                qf_decode(&bAddressOfDPCMMode[i], dpcmModeDicAddressContext);
                if(bAddressOfDPCMMode[i] == 1)
                        nNumberOfSymbol++;
        }
        for(s = 0; s < nNumberOfSymbol; s++) {
                for(k = 1; k < coordIKVHeader.nNumberOfCoord; k++) {
                        if(bIndexDPCMMode[k] == 0) {
                                qf_decode(&bDPCMIndex, dpcmModeDicIndexContext);
                                if(bDPCMIndex == 1)
                                        bIndexDPCMMode[k] = 1;
                        }
                }
        }
}
```

# FIG. 16

```
class CoordIKeyValueDic (unsigned int bSelFlag, unsigned int nKVCodingBit, int nNumberOfKey, int c) {
        if(bSelFlag == 1 && nKVCodingBit != 0) {
                qf_decode(&nDicModeSelect, dicModeSelectionContext);
                if(nDicModeSelect == 1)
                        CoordIIncrementalMode coordiIncrementalMode(nKVCodingBit, nNumberOfKey);
                else
                        CoordIOccurrenceMode coordiOccurrenceMode(nKVCodingBit,        nNumberOfKey,
c);
        }
}
```

56

## FIG. 17

```
class CoordIIncrementalMode (unsigned int nKVCodingBit, int nNumberOfKey) {
        int i, s, k;
        int nSizeOfAddress = (2^ nKVCodingBit+1)-1;
        unsigned int bAddrIndex[nNumberOfKey] = 0;
        int nNumberOfSymbol = 0;
        for(i = 0; i < nSizeOfAddress; i++) {
                qf_decode(&bAddress[i], dicAddressContext);
                if(bAddress[i] == 1) {
                        nNumberOfSymbol++;
                }
        }
        for(s = 0; s < nNumberOfSymbol; s++) {
                qf_decode(&nTrueOne, dicOneContext);
                for(k = 0; k < nNumberOfKey; k++) {
                        if(bIndexOfAddr[k] == 0) {
                                qf_decode(&bAddrIndex, dicIndexContext);
                                if(bAddrIndex == nTrueOne) {
                                        bAddrIndex[k] = 1;
                                }
                        }
                }
        }
}
```

# FIG. 18

```
class CoordIOccurrenceMode (unsigned int nKVCodingBit, int nNumberOfKey, int c) {
    int i, k;
    unsigned int bIndexOfDic[nNumberOfKey] = 0;
    for(i = 0; i < nNumberOfKey; i++) {
        if(bIndexOfDic[i] == 0) {
            bIndexOfDic[nNumberOfKey] = 1;
            if(c == 0)
                decodeSignedQuasiAAC(&nQKV[i], nKVCodingBit+1,
                    kvSignContext, kvXContext);
            else if(c == 1)
                decodeSignedQuasiAAC(&nQKV[i], nKVCodingBit+1,
                    kvSignContext, kvYContext);
            else if(c == 2)
                decodeSignedQuasiAAC(&nQKV[i], nKVCodingBit+1,
                    kvSignContext, kvZContext);
            qf_decode(&bSoleKV, dicSoleKVContext);
            if(bSoleKV == 0) {
                qf_decode(&nTrueOne, dicOneContext);
                for(k = i+1; k < nNumberOfKey; k++) {
                    if(bIndexOfDic[k] == 0) {
                        int bDicIndex;
                        qf_decode(&bDicIndex, dicIndexContext);
                        if(bDicIndex == nTrueOne)
                            bIndexOfDic[k] = 1;
                    }
                }
            }
        }
    }
}
```

# FIG. 19

```
void decodeSignedQuasiAAC(int *nDecodedValue, int qstep, QState *signContext, QState
*valueContext)
{
        int b = qstep - 2;
        int msb = 0;
        do {
                qf_decode(&msb, &valueContext[b]);
                msb = msb << b;
                b--;
        } while (msb == 0 && b >= 0);
        int sgn = 0;
        int rest = 0;
        if(msb != 0) {
                qf_decode(&sgn, signContext);
                while (b >= 0) {
                        int temp = 0;
                        qf_decode(&temp, zeroContext);
                        rest |= (temp << b);
                        b--;
                }
        }
        if(sgn)
                *nDecodedValue = -(msb+rest);
        else
                *nDecodedValue = (msb+rest);
}
```

# FIG. 20A

Rate-Distortion Curve

# FIG. 20B

(a)

(b)

(c)

FIG. 21A

FIG. 21B

EP 1 592 253 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1331824 A